# EUROPÄISCHE PATENTANMELDUNG

(11) **EP 2 693 080 A2**
(43) Veröffentlichungstag der Anmeldung: **05.02.2014**
(21) Anmeldenummer: 13175450.9
(22) Anmeldetag: 08.07.2013
(51) Int. Cl.: F16H 37/04

(54) **Übersetzungsstufe eines Stufengetriebes, sowie Stufengetriebe**

(30) Priorität: 02.08.2012 DE 102012213667
(71) Anmelder: ZF Friedrichshafen AG, 88038 Friedrichshafen (DE)
(72) Erfinder: Kaltenbach, Johannes, 88048 Friedrichshafen (DE); Luebke, Eckhardt, 88048 Friedrichshafen (DE)

(57) **Zusammenfassung**

Die Erfindung betrifft eine Übersetzungsstufe (A; H; N) eines Stufengetriebes (1; 12; 13; 14; 18; 19; 20; 21; 22; 23; 25), über welche mindestens zwei auf zueinander parallelen Achsen verlaufende Getriebewellen miteinander koppelbar sind. Um bei einem kompakten Aufbau dieser Übersetzungsstufe (A; H; N) mehrere unterschiedliche Übersetzungsverhältnisse darstellen zu können, ist koaxial zu einer ersten Achse ein Planetensatz (9; 17; 24) vorgesehen, von dessen drei Getriebekomponenten eine erste Getriebekomponente seitens der ersten Achse trieblich angebunden oder trieblich anbindbar ist und eine zweite Getriebekomponente mit mindestens einem Stirnrad (Z1, Z2; Z18, Z19; Z32, Z33) im Zahneingriff steht, welches auf je einer weiteren, zur ersten Achse parallelen Achse platziert ist. Dabei kann zum einen ein erstes Übersetzungsverhältnis durch Festsetzen einer dritten Getriebekomponente des Planetensatzes (9; 17; 24) geschaltet und zum anderen ein zweites Übersetzungsverhältnis durch triebliches Anbinden von entweder der dritten Getriebekomponente oder der zweiten Getriebekomponente seitens der ersten Achse dargestellt werden. Die Erfindung betrifft des Weiteren ein Stufengetriebe (1; 12; 13; 14; 18; 19; 20; 21; 22; 23; 25), insbesondere ein Kraftfahrzeuggetriebe, bei welchem mindestens eine vorgenannte Übersetzungsstufe (A; H; N) zur Anwendung kommt.

## Beschreibung

Die Erfindung betrifft eine Übersetzungsstufe eines Stufengetriebes, über welche mindestens zwei auf zueinander parallelen Achsen verlaufende Getriebewellen miteinander koppelbar sind. Die Erfindung betrifft des Weiteren ein Stufengetriebe, insbesondere ein Kraftfahrzeuggetriebe, bei welchem mindestens eine vorgenannte Übersetzungsstufe zur Anwendung kommt.

Kraftfahrzeuggetriebe werden überwiegend als Stufengetriebe ausgeführt, wobei dabei als Bauarten Handschaltgetriebe, automatisiertes Schaltgetriebe und Stufenautomatgetriebe gängig sind. Im einfachsten Aufbau weist ein Stufengetriebe eine Übersetzungsstufe auf, mittels welcher ein Leistungsfluss von einer Getriebewelle über miteinander kämmende Zahnräder auf eine parallel verlaufende Getriebewelle geführt werden kann. Zumeist sind aber mehrere Übersetzungsstufen vorgesehen, die über entsprechende Schaltelemente einzeln oder in Kombination miteinander zur Darstellung unterschiedlicher Gänge des jeweiligen Stufengetriebes in einen Kraftfluss einbindbar sind. Des Weiteren kann bei einem als Kraftfahrzeuggetriebe ausgestalteten Stufengetriebe im Hinblick auf einen Rückwärtsgang zumeist über eine Getriebestufe eine Drehrichtungsumkehr dargestellt werden, wobei bei einer gängigen Variante der Kraftfluss von der jeweils einen Getriebewelle über ein Zwischenrad einer Zwischenwelle auf die jeweils andere Getriebewelle geführt wird, so dass durch die Zahneingriffe des Zwischenrades mit Zahnrädern der Getriebewellen die gewünschte Drehrichtungsumkehr realisiert werden kann.

Aus der DE 44 22 900 A1 geht ein Stufengetriebe in Form eines Kraftfahrzeuggetriebes hervor, wobei dieses Kraftfahrzeuggetriebe dabei in Gruppenbauweise ausgeführt ist und sich aus einer Hauptgruppe mit vorgeschalteter Splitgruppe und nachgeschalteter Bereichsgruppe zusammensetzt. Eine Eingangswelle, eine Ausgangswelle und eine Abtriebswelle verlaufen dabei koaxial zueinander auf einer Hauptwellenachse, zu welcher zwei parallele Vorgelegewellenachsen mit je einer Vorgelegewelle vorgesehen sind. Ausgehend von der Eingangswelle kann der Kraftfluss nun entweder über die beiden Vorgelegewellen mittels entsprechender Übersetzungsstufen auf die Ausgangswelle zur Bereichsgruppe oder aber direkt von der Eingangswelle auf die Ausgangswelle geführt werden. Eine der Übersetzungsstufen der Hauptgruppe ist dabei vorgelegeseitig mit Stirnrändern ausgeführt, deren Verzahnungen axial verlängert ausgestaltet sind und einerseits direkt mit einem gemeinsamen, an der Ausgangswelle festsetzbaren Stirnrad kämmen und andererseits über je ein Zwischenrad mit einem ebenfalls an der Ausgangswelle festsetzbaren Stirnrad in Verbindung stehen. Infolgedessen kann über diese Getriebestufe entweder ein Vorwärtsgang des Stufengetriebes dargestellt werden, indem das direkt mit den vorgelegeseitigen Stirnrädern kämmende Losrad drehfest mit der Ausgangswelle verbunden wird, oder dadurch ein Rückwärtsgang geschaltet werden, dass das mit den Zwischenrädern im Zahneingriff stehende Losrad drehfest mit der Ausgangswelle gekoppelt wird.

Ausgehend vom vorstehend beschriebenen Stand der Technik ist es nun die Aufgabe der vorliegenden Erfindung, eine Übersetzungsstufe eines Stufengetriebes zur Verfügung zu stellen, mittels welcher bei kompaktem Aufbau mehrere unterschiedliche Übersetzungsverhältnisse darstellbar sind.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ausgestaltungen eines Stufengetriebes, welches zumindest eine erfindungsgemäße Übersetzungsstufe umfasst, gehen aus den Ansprüchen 6 bis 17 hervor.

Gemäß der Erfindung sind mindestens zwei Getriebewellen über eine erfindungsgemäße Übersetzungsstufe miteinander koppelbar, wobei diese mindestens zwei Getriebewellen auf zueinander parallelen Achsen verlaufen. Im einfachsten Fall können dabei über die erfindungsgemäße Übersetzungsstufe genau zwei parallel zueinander verlaufende Getriebewellen miteinander in Verbindung gebracht werden, von denen die eine beispielsweise eine Eingangswelle und die andere eine Ausgangswelle oder die eine eine Ein- oder Ausgangswelle und die andere eine Vorgelegewelle ist. Im Sinne der Erfindung können aber auch drei Getriebewellen vorgesehen sein, die über eine erfindungsgemäße Übersetzungsstufe untereinander koppelbar sind. So können zwei koaxial zueinander verlaufende Eingangswellen eines Doppelkupplungsgetriebes jeweils einzeln mittels der erfindungsgemäßen Übersetzungsstufe mit einer hierzu parallel verlaufenden Vorgelegewelle oder Ausgangswelle in Verbindung gebracht werden. Ebenso kann auch eine zentrisch verlaufende Ein- oder Ausgangswelle durch eine entsprechend der Erfindung gestaltete Übersetzungsstufe mit Vorgelegewellen zweier zueinander parallel vorgesehenen Vorgelege gekoppelt werden. Schließlich können insbesondere bei einem Doppelkupplungsgetriebe auch vier Getriebewellen untereinander mittels einer erfindungsgemäßen Übersetzungsstufe gekoppelt werden, nämlich die beiden koaxial zueinander verlaufenden Eingangswellen mit den Vorgelegewellen zweier zueinander parallel vorgesehener Vorgelege.

Die Erfindung umfasst nun die technische Lehre, dass innerhalb der Übersetzungsstufe ein Planetensatz koaxial zu einer ersten Achse vorgesehen ist, von dessen drei Getriebekomponenten eine erste Getriebekomponente seitens der ersten Achse trieblich angebunden oder trieblich anbindbar ist und eine zweite Getriebekomponente mit mindestens einem Stirnrad im Zahneingriff steht, welches auf je einer weiteren, zur ersten Achse parallelen Achse platziert ist. Hierbei kann zum einen ein erstes Übersetzungsverhältnis durch Stillsetzen einer dritten Getriebekomponente des Planetensatzes geschaltet und zum anderen ein zweites Übersetzungsverhältnis durch triebliches Anbinden von entweder der dritten Getriebekomponente oder der zweiten Getriebekomponente seitens der ersten Achse dargestellt werden.

Mit anderen Worten umfasst die erfindungsgemäße Übersetzungsstufe also einen Planetensatz, der mit einer ersten seiner Getriebekomponenten seitens einer ersten Achse drehfest angebunden ist oder, alternativ zu der vorgenannten Variante, drehfest angebunden werden kann. Ferner kämmt eine zweite Getriebekomponente des Planetensatzes mit mindestens einem Stirnrad, das dabei auf jeweils einer weiteren Achse platziert ist, wobei diese je eine weitere Achse parallel zu der ersten Achse verläuft. Es können nun zwei unterschiedliche Übersetzungsverhältnisse mittels der erfindungsgemäßen Übersetzungsstufe dargestellt werden, indem zum Schalten eines ersten Übersetzungsverhältnisses eine dritte Getriebekomponente des Planetensatzes stillgesetzt wird, d.h. an der Ausführung einer Drehbewegung durch Festsetzen an einem ortsfesten Bauteil gehindert wird. Zur Darstellung eines zweiten Übersetzungsverhältnisses kann dann entweder die dritte Getriebekomponente seitens der ersten Achse trieblich angebunden oder aber in einer hierzu alternativen Variante die zweite Getriebekomponente drehfest seitens der ersten Achse verbunden werden.

Mittels eines derartig verschachtelten Aufbaus einer Übersetzungsstufe können auf besonders kompakte Art und Weise zwei Übersetzungsverhältnisse dargestellt werden. Denn dadurch, dass die zweite Getriebekomponente des Planetensatzes neben der sonstigen Anbindung innerhalb des Planetensatzes zusätzlich mit mindestens einem Stirnrad im Zahneingriff steht und dabei im Zusammenspiel mit diesem Stirnrad je eine Stirnradstufe ausbildet, können ein Planetensatz und mindestens ein Stirnradsatz auf geringem Raum miteinander kombiniert werden. Dabei sind aufgrund der Anbindungsmöglichkeiten der Getriebekomponenten des Planetensatzes zwei unterschiedliche Übersetzungsverhältnisse realisierbar. Da die beiden unterschiedlichen Übersetzungsverhältnisse hierbei zugleich mit einer geringen Bauteilanzahl dargestellt werden können, zeichnet sich die erfindungsgemäße Übersetzungsstufe zudem durch ein gutes Leistungsgewicht und einen geringeren fertigungstechnischen Aufwand aus. Schließlich ist eine einfache Montage dieser Übersetzungsstufe im Bereich eines Stufengetriebes möglich.

Mit "Getriebekomponenten" des Planetensatzes sind im Sinne der Erfindung ein Planetenräder führender Planetensteg und zwei Zentralräder gemeint, wobei letztere jeweils mit den Planetenrädern des Planetenstegs im Zahneingriff stehen. Bei den beiden Zentralrädern kann es sich dann je nach konkreter Ausgestaltung der Übersetzungsstufe um ein außenverzahntes Sonnenrad und ein innenverzahntes Hohlrad oder auch zwei außenverzahnte Sonnenräder handeln.

Entsprechend einer vorteilhaften Ausgestaltung der Erfindung ist die zweite Getriebekomponente als Hohlrad ausgestaltet, welches einerseits an einer Innenverzahnung mit den übrigen Getriebekomponenten des Planetensatzes in Verbindung steht und andererseits an einer Außenverzahnung mit dem mindestens einen Stirnrad kämmt. Eine derartige Ausgestaltung der Übersetzungsstufe hat dabei den Vorteil, dass somit sämtliche Zahneingriffe in eine Radebene gelegt werden können, was einen besonders kompakten axialen Aufbau der Übersetzungsstufe zur Folge hat.

In Weiterbildung der vorgenannten Ausgestaltung ist die erste Getriebekomponente durch ein Sonnenrad gebildet, welches mittels zwischenliegender Planetenräder eines die dritte Getriebekomponente bildenden Planetenstegs mit dem Hohlrad in Verbindung steht. Bei einem derartigen Aufbau der Übersetzungsstufe treten bei den beiden darstellbaren Übersetzungsverhältnissen zwei unterschiedliche Drehrichtungen auf, indem zum einen der Planetensteg festgesetzt und zum anderen entweder der Planetensteg oder das Hohlrad drehfest mit einer seitens der ersten Achse vorgesehenen Getriebewelle verbunden werden. Folglich kann also über die Übersetzungsstufe auf kompakte Art und Weise sowohl ein Vorwärts- als auch ein Rückwärtsgang geschaltet werden. Gegenüber ansonsten gängigen Systemen, wie beispielsweise dem der DE 44 22 900 A1, weist ein derartiger Aufbau den Vorteil auf, dass axiale Baulänge eingespart wird und zudem ein jeweiliges Zwischenrad mitsamt zugehöriger Lagerstellen entfallen kann. Infolgedessen können auch Gehäusetrennstellen eines jeweiligen Getriebegehäuses frei gewählt werden, welche ansonsten im Bereich des jeweiligen Zwischenrades für dessen Montage vorzusehen sind. Schließlich lässt sich ein Schubbetrieb im Rückwärtsgang lagertechnisch unkritisch darstellen, wohingegen bei einem System mit Zwischenrad, wie bei der DE 44 22 900 A1, im Schubbetrieb hohe Lagerkräfte im Bereich der das Zwischenrad tragenden Zwischenwelle auftreten. Des Weiteren kann durch den verschachtelten Aufbau der Übersetzungsstufe ein Rückwärtsgang mit einer höheren Übersetzung dargestellt werden, da eine Übersetzung des Planetensatzes zusätzlich zu der durch den Zahneingriff mit dem mindestens einen Stirnrad definierten Übersetzung wirksam ist.

Gemäß einer hierzu alternativen Ausführungsform der Erfindung ist die erste Getriebekomponente durch einen Planetensteg des Planetensatzes gebildet, welche Planetenräder führt, die jeweils sowohl mit einem die dritte Getriebekomponente bildenden Sonnenrad als auch mit dem Hohlrad kämmen. Durch einen derartigen Aufbau der erfindungsgemäßen, verschachtelten Übersetzungsstufe können zwei Übersetzungsverhältnisse mit gleicher Drehrichtung auf kompakte Art und Weise dargestellt werden.

Entsprechend einer weiteren, vorteilhaften Ausführungsform der Erfindung steht die zweite Getriebekomponente des Planetensatzes mit zwei Stirnrädern im Zahneingriff, welche jeweils seitens je einer parallel zur ersten Achse verlaufenden Achse vorgesehen sind. Die zweite Getriebekomponente des Planetensatzes kämmt also mit zwei Stirnrädern, die dann bei Anwendung bei einem Stufengetriebe auf parallel zueinander verlaufenden Getriebewellen angeordnet sind. Insbesondere wenn diese beiden parallelen Achsen in einer gemeinsamen Ebene mit der zwischenliegenden, ersten Achse platziert sind, ist die zweite Getriebekomponente bezüglich Radialkräften ausgeglichen, was eine Lagerung dieser zweiten Getriebekomponente wesentlich vereinfacht. So ist hier unter Umständen keine eigene Lagerung erforderlich, sondern eine axiale Fixierung, beispielsweise über einen Druckkamm, ausreichend.

Erfindungsgemäß umfasst ein Stufengetriebe, bei welchem eine erfindungsgemäße Übersetzungsstufe zur Anwendung kommt, mindestens zwei auf zueinander parallelen Achsen verlaufende Getriebewellen, welche über mindestens eine Übersetzungsstufe miteinander koppelbar sind. Dabei ist zumindest eine Übersetzungsstufe als erfindungsgemäße, verschachtelte Übersetzungsstufe ausgestaltet. Im Sinne der Erfindung kann es sich bei einem derartigen Stufengetriebe um ein Handschaltgetriebe, ein automatisiertes Schaltgetriebe oder ein Stufenautomatgetriebe, insbesondere Doppelkupplungsgetriebe, eines Pkws handeln. Des Weiteren ist auch eine Ausgestaltung als automatisiertes Schaltgetriebe in einfacher Bauweise oder Gruppenbauweise oder als Stufenautomatgetriebe, insbesondere Doppelkupplungsgetriebe, eines Nutzfahrzeuges denkbar.

Konkrete Ausgestaltungen eines Stufengetriebes gehen dann aus den weiteren Ansprüchen 7 bis 17 hervor. Dabei kann unter Verwendung einer oder mehrerer erfindungsgemäßer, verschachtelter Übersetzungsstufen ein kompakter Aufbau des jeweiligen Stufengetriebes in axialer Richtung erreicht werden. Je nach Ausgestaltung der jeweiligen verschachtelten Übersetzungsstufe sind dabei in einer Radebene ein Vorwärtsgang und ein Rückwärtsgang schaltbar oder aber zwei unterschiedliche Vorwärtsgänge darstellbar, wobei letzteres bei einem Stufengetriebe eines Nutzfahrzeuges dann insbesondere zur Darstellung von Kriechgängen genutzt wird.

Die Erfindung ist nicht auf die angegebene Kombination der Merkmale des Hauptanspruchs oder der abhängigen Ansprüche beschränkt. Es ergeben sich darüber hinaus Möglichkeiten einzelne Merkmale, auch soweit sie aus den Ansprüchen, der nachfolgenden Beschreibung von Ausführungsformen oder unmittelbar aus den Figuren hervorgehen, miteinander zu kombinieren. Die Bezugnahme der Ansprüche auf die Zeichnungen durch die Verwendung von Bezugszeichen soll den Schutzumfang der Ansprüche nicht beschränken.

Weitere, vorteilhafte Ausgestaltungen der Erfindung ergeben sich aus der nachfolgenden Beschreibung bevorzugter Ausführungsformen der Erfindung, die Bezug auf die in den Zeichnungen dargestellten Figuren nimmt. Es zeigt:
- Fig. 1: eine schematische Ansicht eines Stufengetriebes gemäß einer ersten bevorzugten Ausführungsform der Erfindung;
- Fig. 2: eine schematische Darstellung eines Stufengetriebes entsprechend einer zweiten erfindungsgemäßen Ausgestaltung;
- Fig.3: ein beispielhaftes Schaltschema der Stufengetriebe aus Fig. 1 und Fig. 2;
- Fig. 4: eine schematische Darstellung eines Stufengetriebes entsprechend einer dritten bevorzugten Ausführungsform der Erfindung;
- Fig. 5: ein beispielhaftes Schaltschema des Stufengetriebes aus Fig. 4;
- Fig. 6: eine schematische Ansicht eines Stufengetriebes gemäß einer vierten bevorzugten Ausgestaltung;
- Fig. 7: ein beispielhaftes Schaltschema des Stufengetriebes aus Fig. 6;
- Fig. 8: eine schematische Darstellung eines Stufengetriebes entsprechend einer fünften Ausführungsform,
- Fig. 9: eine schematische Darstellung eines Stufengetriebes entsprechend einer sechsten bevorzugten Ausgestaltung;
- Fig. 10: ein beispielhaftes Schaltschema der Stufengetriebe aus Fig. 8 und Fig. 9;
- Fig. 11: eine schematische Ansicht eines Stufengetriebes gemäß einer siebten bevorzugten Ausführungsform;
- Fig. 12: eine schematische Darstellung eines Stufengetriebes entsprechend einer achten Ausgestaltungsmöglichkeit der Erfindung;
- Fig. 13: ein beispielhaftes Schaltschema der Stufengetriebe aus Fig. 11 und Fig. 12;
- Fig. 14: ein weiteres beispielhaftes Schaltschema der Stufengetriebe aus Fig. 11 und Fig. 12;
- Fig. 15: eine schematische Ansicht eines Stufengetriebes entsprechend einer neunten Ausführungsform der Erfindung;
- Fig. 16: ein beispielhaftes Schaltschema des Stufengetriebes aus Fig. 15;
- Fig. 17: eine schematische Darstellung einer zehnten bevorzugten Ausführungsform eines Stufengetriebes;
- Fig. 18: ein beispielhaftes Schaltschema des Stufengetriebes aus Fig. 17:
- Fig. 19: eine schematische Ansicht eines Stufengetriebes gemäß einer elften bevorzugten Ausführungsform der Erfindung; und
- Fig. 20: ein beispielhaftes Schaltschema des Stufengetriebes aus Fig. 19.

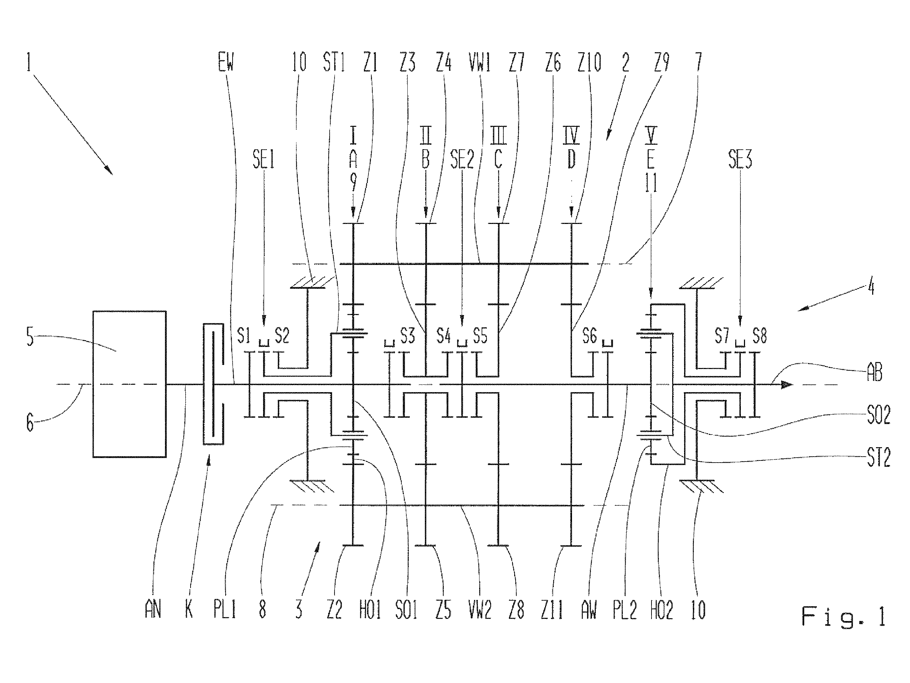

Aus Fig. 1 geht eine schematische Ansicht eines Stufengetriebes 1 entsprechend einer ersten Ausführungsform der Erfindung hervor, wobei dieses Stufengetriebe 1 insbesondere als Kraftfahrzeuggetriebe eines Nutzfahrzeuges zur Anwendung kommt. Vorliegend ist das Stufengetriebe 1 in Gruppenbauweise ausgeführt und setzt sich aus einer Hauptgruppe 2, sowie einer der Hauptgruppe 2 vorgeschalteten Splitgruppe 3 und einer der Hauptgruppe 2 nachgeschalteten Bereichsgruppe 4 zusammen. Des Weiteren ist das Stufengetriebe 1 an einer Antriebseite AN mit einer Brennkraftmaschine 5 verbunden und steht an einer Abtriebsseite AB mit einem-vorliegend nicht weiter dargestellten - Antriebsstrang des Nutzfahrzeuges in Verbindung.

Wie aus Fig. 1 zu erkennen ist, bilden die Hauptgruppe 2 und die Splitgruppe 3 gemeinsam ein in Vorgelegebauweise ausgeführtes Getriebe, dessen Eingangswelle EW und dessen Ausgangswelle AW gemeinsam mit der Antriebsseite AN und der Abtriebsseite AB auf einer Hauptwellenachse 6 liegen. Dabei kann die Eingangswelle EW mit der Antriebsseite AN über ein Lastschaltelement K verbunden werden, während die Ausgangswelle AW mit der Abtriebsseite AB über die zwischenliegende Bereichsgruppe 4 koppelbar ist. Das Lastschaltelement K ist dabei insbesondere als Trockenkupplung ausgeführt, kann aber ebenso gut auch als nasslaufende Kupplung ausgestaltet sein. Des Weiteren verfügt das aus der Hauptgruppe 2 und der Splitgruppe 3 gebildete Vorgelegegetriebe über zwei parallel zur Hauptwellenachse 6 liegende Vorgelegeachsen 7 und 8, auf denen jeweils je eine Vorgelegewelle VW1 bzw. VW2 platziert ist. Zwischen den Vorgelegeachsen 7 und 8 und der zwischenliegenden Hauptwellenachse 6 sind dabei in vier axial aufeinander folgenden Radebenen I bis IV vier Übersetzungsstufen A, B, C und D vorgesehen, über welche im Einzelnen entweder die Eingangswelle EW oder die Ausgangswelle AW mit jeweils beiden Vorgelegewellen VW1 und VW2 gekoppelt werden kann, so dass ein Leistungsfluss, abgesehen von einer direkten Koppelung der Eingangswelle EW mit der Ausgangswelle AW, zu gleichen Teilen über die beiden Vorgelegewellen VW1 und VW2 geführt wird.

Als Besonderheit umfasst hierbei die in der ersten Radebene I liegende Übersetzungsstufe A einen Planetensatz 9, der koaxial zur Hauptwellenachse 6 platziert ist und gemeinsam mit Stirnrädern Z1 und Z2 einen verschachtelten Aufbau der Übersetzungsstufe A definiert, wobei das Stirnrad Z1 drehfest auf der Vorgelegewelle VW1 und das Stirnrad Z2 drehfest auf der Vorgelegewelle VW2 vorgesehen ist. Seitens des Planetensatzes 9 ist dabei ein Sonnenrad SO1 drehfest auf der Eingangswelle EW angeordnet und steht über Planetenräder PL1 mit einem Hohlrad HO1 des Planetensatzes 9 in Verbindung. Die Verschachtelung im Zusammenspiel mit den Stirnrädern Z1 und Z2 ist nun dadurch gebildet, dass das Hohlrad HO1 einerseits an einer Innenverzahnung mit den Planetenrädern PL1 kämmt und andererseits an einer Außenverzahnung mit den beiden Stirnrädern Z1 und Z2 jeweils im Zahneingriff steht.

Über die Übersetzungsstufe A kann nun eine Drehbewegung der Eingangswelle EW mit zwei unterschiedlichen Übersetzungsverhältnissen jeweils auf die beiden parallel verlaufenden Vorgelegewellen VW1 und VW2 übersetzt werden. Zur Darstellung eines ersten Übersetzungsverhältnisses kann dabei ein die Planetenräder PL1 führender Planetensteg ST1 über ein ersten Schaltelement S1 drehfest mit der Eingangswelle EW gekoppelt werden, so dass in der Folge das Sonnenrad SO1 und der Planetensteg ST1 als Block umlaufen und die hierbei nicht um ihre jeweiligen Achsen rotierenden Planetenräder PL1 das Hohlrad HO1 mitführen. Das Hohlrad HO1 überträgt diese Drehbewegung dann wiederum auf die beiden Stirnräder Z1 und Z2.

Ein zweites Übersetzungsverhältnis der Übersetzungsstufe A wird des Weiteren dadurch dargestellt, dass der Planetensteg ST1 über ein Schaltelement S2 an einem Getriebegehäuse 10 festgesetzt wird. Hierdurch wird eine Drehbewegung des Planetensteges ST1 unterbunden, so dass in der Folge eine Drehbewegung des mit der Eingangswelle EW laufenden Sonnenrades SO1 mittels der zwischenliegenden Planetenräder PL1 in eine im Vergleich zum ersten Übersetzungsverhältnis entgegengesetzt orientierte Drehbewegung des Hohlrades HO1 umgesetzt wird. Die Planetenräder rotieren dabei um ihre jeweiligen Achsen auf dem Planetensteg ST1. Im Endeffekt resultiert die entgegengesetzt orientierte Drehbewegung des Hohlrades HO1 auch in einer entgegengesetzten Drehbewegung der Stirnräder Z1 und Z2 und damit auch der Vorgelegewellen VW1 und VW2. Dementsprechend kann mit der Übersetzungsstufe A aufgrund der beiden Koppelungsmöglichkeiten des Planetensteges ST1 einerseits ein Vorwärtsgang und andererseits ein Rückwärtsgang definiert werden.

Benachbart zu der Übersetzungsstufe A ist in der zweiten Radebene II die Übersetzungsstufe B vorgesehen, welche sich aus einem koaxial zu der Eingangswelle EW und der Ausgangswelle AW vorgesehenen, drehbar gelagerten Stirnrad Z3 und zwei beiderseits dieses Stirnrades Z3 liegenden Stirnrädern Z4 und Z5 zusammensetzt. Die beiden Stirnräder Z4 und Z5 stehen dabei jeweils im Zahngriff mit dem zwischenliegenden Stirnrad Z3, wobei das Stirnrad Z4 drehfest auf der Vorgelegewelle VW1 und das Stirnrad Z5 drehfest auf der Vorgelegewelle VW2 platziert ist. Das Stirnrad Z3 kann nun mittels eines dritten Schaltelements S3 an der Eingangswelle EW und über ein viertes Schaltelement S4 an der Ausgangswelle AW festgesetzt werden. Bei drehfester Koppelung des Stirnrades Z3 mit der Eingangswelle EW wird infolge dessen eine Drehbewegung der Eingangswelle EW durch die Zahneingriffe des Stirnrades Z3 mit den Stirnrädern Z4 und Z5 auf die beiden Vorgelegewellen VW1 und VW2 übersetzt, wobei diese Drehbewegung dann über eine der Übersetzungsstufen C oder D der nachfolgen Radebenen III und IV wieder auf die Ausgangswelle AW geführt wird. Hingegen werden bei Festsetzen des Stirnrades Z3 an der Ausgangswelle AW über die beiden Vorgelegewellen VW1 und VW 2 geführte Teilleistungsflüsse wieder auf der Ausgangswelle AW zusammengeführt. Dementsprechend kann also eine über die Übersetzungsstufe A auf die Vorgelegewellen VW1 und VW2 übersetzte Drehbewegung der Eingangswelle EW wiederum auf die Ausgangswelle AW übertragen werden. Schließlich kann das Stirnrad Z3 aber auch bei gleichzeitiger Betätigung des Schaltelements S3 und des Schaltelements S4 sowohl mit der Eingangswelle EW als auch mit der Ausgangswelle AW drehfest gekoppelt werden, so dass in der Folge auch die Eingangswelle EW und die Ausgangswelle AW drehfest miteinander verbunden sind. Hierdurch wird ein starrer Durchtrieb von der Eingangswelle EW auf die Ausgangswelle AW dargestellt.

Benachbart zur Übersetzungsstufe B ist in der dritten Radebene III die Übersetzungsstufe C vorgesehen, die sich aus einem Stirnrad Z6, sowie zwei weiteren mit dem Stirnrad Z6 jeweils im Zahneingriff stehenden Stirnrädern Z7 und Z8 zusammensetzt. Hierbei ist das Stirnrad Z6 drehbar auf der Ausgangswelle AW gelagert, während das Stirnrad Z7 drehfest auf der Vorgelegewelle VW1 und Stirnrad Z8 drehfest auf der Vorgelegewelle VW 2 platziert ist. Auf die Vorgelegewellen VW1 und VW2 geführte Teilleistungsströme können wiederum auf der Ausgangswelle AW zusammengeführt werden, indem das Stirnrad Z6 über ein Schaltelement S5 an der Ausgangswelle AW festgesetzt wird.

In der Radebene IV ist mit der Übersetzungsstufe D eine weitere Übersetzungsstufe vorgesehen, welche hierbei durch die Stirnräder Z9, Z10 und Z11 gebildet ist. Ähnlich dem Aufbau der benachbart liegenden Übersetzungsstufe C ist dabei das Stirnrad Z9 drehbar auf der Ausgangswelle AW gelagert und kämmt sowohl mit dem drehfest auf der Vorgelegewelle VW1 vorgesehenen Stirnrad Z10 als auch mit dem drehfest auf der Vorgelegewelle VW2 angeordneten Stirnrad Z11. Drehbewegungen der Vorgelegewellen VW1 und VW2 können nun über die Übersetzungsstufe D auf die zwischenliegende Ausgangswelle AW übersetzt werden, indem das Stirnrad Z9 über ein Schaltelement S6 an der Ausgangswelle AW festgesetzt wird.

Schließlich ist dem aus Splitgruppe 3 und Hauptgruppe 2 gebildeten Vorgelegegetriebe die in einer fünften Radebene V liegende Bereichsgruppe 4 nachgeschaltet, welche hierbei durch eine Übersetzungsstufe E in Form einer Planetenstufe 11 gebildet ist. Mittels dieser Planetenstufe 11 kann eine Drehbewegung der Ausgangswelle AW mit unterschiedlichen Übersetzungen auf die Abtriebsseite AB übertragen und unterschiedliche Fahrbereiche dargestellt werden. Dabei ist ein Sonnenrad S02 der Planetenstufe 11 drehfest auf der Ausgangswelle AW angeordnet und kämmt mit Planetenrädern PL2, die über einen gemeinsamen Planetensteg ST2 geführt werden, der wiederum drehfest mit der Abtriebsseite AB in Verbindung steht. Neben dem Sonnenrad S02 kämmen die Planetenräder PL2 zudem mit einem Hohlrad H02, wobei dieses Hohlrad H02 zur Darstellung eines einem ersten Fahrbereich zugeordneten Übersetzungsverhältnisses an dem Getriebegehäuse 10 über ein Schaltelement S7 festgesetzt und zum Schalten eines einem zweiten Fahrbereich zugeordneten Übersetzungsverhältnisses mittels eines Schaltelements S8 drehfest mit der Abtriebsseite AB gekoppelt werden kann. Im letztgenannten Fall laufen das Hohlrad H02 und der Planetensteg ST2 als Block um.

Die Schaltelemente S1 bis S8 sind vorliegend jeweils als Sperrsynchronisationen ausgestaltet über welche jeweils bei Betätigung das jeweilige Stirnrad Z3 bzw. Z6 bzw. Z9 bzw. die jeweilige Getriebekomponente ST1 bzw. H02 nach Abbau von Drehzahldifferenzen mit der jeweiligen Welle EW bzw. AW bzw. AB gekoppelt bzw. am Getriebegehäuse 10 festgesetzt wird. Alternativ dazu ist aber auch eine Ausführung der Schaltelemente S1 bis S8 als anderweitig ausgestaltete formschlüssige Schaltelemente oder aber auch als kraftschlüssige Schaltelemente, beispielsweise Lamellenkupplungen, denkbar.

Wie zudem aus Fig. 1 ersichtlich ist, sind nun das Schaltelement S1 und das Schaltelement S2 zu einer Schalteinrichtung SE1, das Schaltelement S4 und das Schaltelement S5 zu einer Schalteinrichtung SE2, sowie das Schaltelement S7 und das Schaltelement S8 zu einer Schalteinrichtung SE3 jeweils zusammengefasst. Diese Schalteinrichtungen SE1 bis SE3 sind dabei jeweils als Doppelsynchronisierungen ausgestattet, bei welchen die je zugehörigen Schaltelemente S1 und S2 bzw. S4 und S5 bzw. S7 und S8 über je eine gemeinsame Schaltmuffe verfügen, welche aus einer jeweiligen Neutralstellung über einen je zugehörigen Aktuator gezielt entweder in eine Betätigungsstellung des jeweils einen Schaltelements S1 bzw. S4 bzw. S7 oder in eine Betätigungsstelllung des jeweils anderen Schaltelements S2 bzw. S5 bzw. S8 bewegt werden kann. Hingegen sind die Schaltelemente S3 und S6 jeweils als Einzelsynchronisierungen ausgeführt, bei welchen eine jeweilige Schaltmuffe über einen je zugehörigen Aktuator aus einer Neutralstellung in jeweils eine Schaltstellung bewegbar ist.

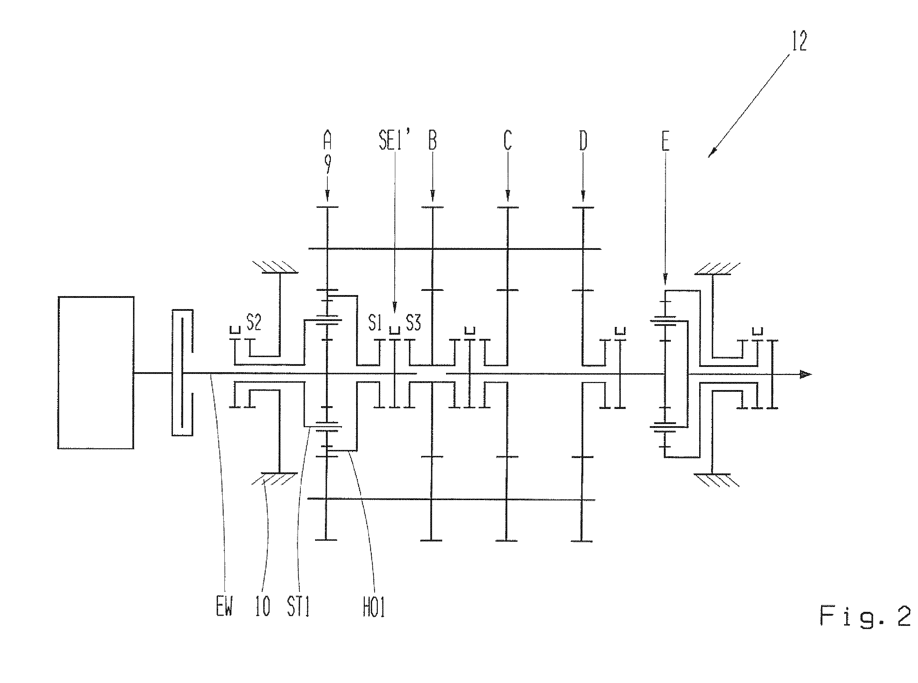

Aus Fig. 2 geht eine zweite bevorzugte Ausgestaltung eines erfindungsgemäßen Stufengetriebes 12 hervor, wobei im Unterschied zu der Getriebevariante nach Fig. 1 hierbei der Planetensteg ST1 lediglich über das Schaltelement S2 am Getriebegehäuse 10 festgesetzt werden kann, wohingegen das Schaltelement S1 in diesem Fall bei Betätigung die Eingangswelle EW mit dem Hohlrad HO1 der Planetenstufe 9 drehfest koppelt. Hierbei ist das Schaltelement S1 mit dem Schaltelement S3 zu einer Schalteinrichtung SE1' zusammengefasst, während das Schaltelement S2 nunmehr als Einzelsynchronisierung vorliegt. Im Übrigen entspricht die Ausgestaltung des Stufengetriebes 12 aus Fig. 2 dem Stufengetriebe 1 aus Fig. 1.

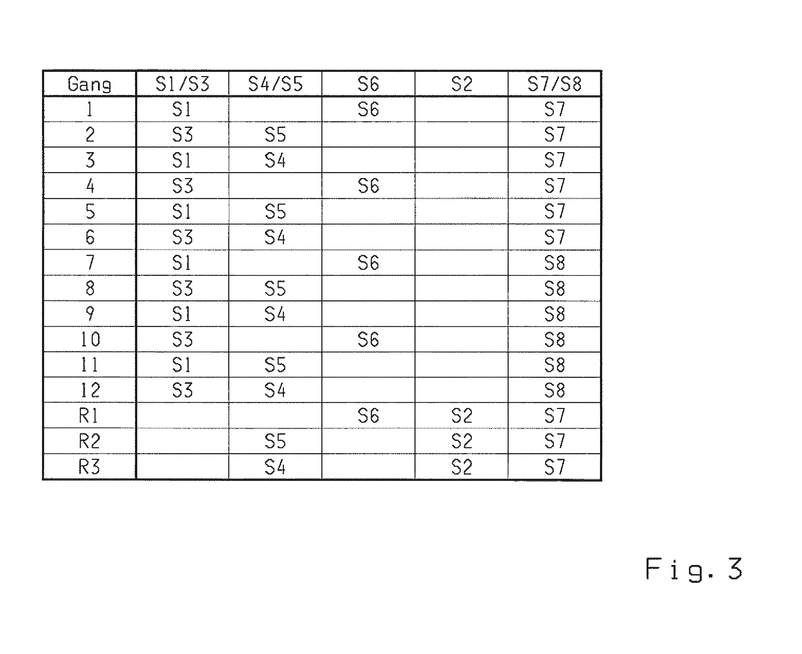

In Fig. 3 ist ein beispielhaftes Schaltschema dargestellt, welches sich sowohl durch das Stufengetriebe 1 aus Fig. 1 als auch durch das Stufengetriebe 12 aus Fig. 2 jeweils verwirklichen lässt. Wie hierbei zu erkennen ist, werden die Schaltelemente S1 und S3, die Schaltelemente S4 und S5 und die Schaltelemente S7 und S8 jeweils alternativ zueinander bestätigt. Insgesamt sind mit den Stufengetrieben 1 und 12 jeweils zwölf Vorwärtsgänge, sowie drei Rückwärtsgänge darstellbar, wobei zum Gangwechsel stets eine Verbindung der Eingangswelle EW zur Antriebsseite AN über das Lastschaltelement K zu unterbrechen und erst nach einem Wechsel zwischen den jeweiligen Schaltelementen S1 bis S8 wieder zu schließen ist. Gangwechsel lassen sich folglich bei den Stufengetrieben 1 und 12 nur unter Unterbrechung der Zugkraft darstellen.

Zum Schalten eines ersten Vorwärtsganges sind die Schaltelemente S1, S6 und S7 zu betätigen, während zur Darstellung eines zweiten Vorwärtsganges die Schaltelemente S3, S5 und S7 anzusteuern sind. Ein weiterer, dritter Vorwärtsgang ergibt sich durch Betätigen der Schaltelemente S1, S4 und S7, sowie ein vierter Vorwärtsgang durch Ansteuern der Schaltelemente S3, S6 und S7. Ein fünfter Vorwärtsgang ist dann durch Betätigen der Schaltelemente S1, S5 und S7 schaltbar, ein hierauf folgender sechster Vorwärtsgang durch Ansteuern der Schaltelemente S3, S4 und S7. Zur Darstellung eines siebten Vorwärtsganges sind dann die Schaltelemente S1, S6 und S8 in einem betätigten Zustand zu überführen, wohingegen zum Schalten eines achten Vorwärtsganges die Schaltelemente S3, S5 und S8 zu betätigen sind. Ein hierauf folgender, neunter Vorwärtsgang wird durch Ansteuern der Schaltelemente S1, S4 und S8 geschaltet, wohingegen ein zehnter Vorwärtsgang durch Betätigen der Schaltelemente S3, S6 und S8 wählbar ist. Schließlich ergibt sich ein elfter Vorwärtsgang mittels Ansteuerung der Schaltelemente S1, S5 und S8, während ein zwölfter Vorwärtsgang über die Schaltelemente S3, S4 und S8 schaltbar ist.

Ein erster Rückwärtsgang ist durch Betätigen der Schaltelemente S6, S2 und S7 schaltbar, wohingegen ein zweiter Rückwärtsgang durch Ansteuern der Schaltelemente S5, S2 und S7 dargestellt wird. Schließlich ergibt sich ein dritter Rückwärtsgang durch Betätigen der Schaltelemente S4, S2 und S7.

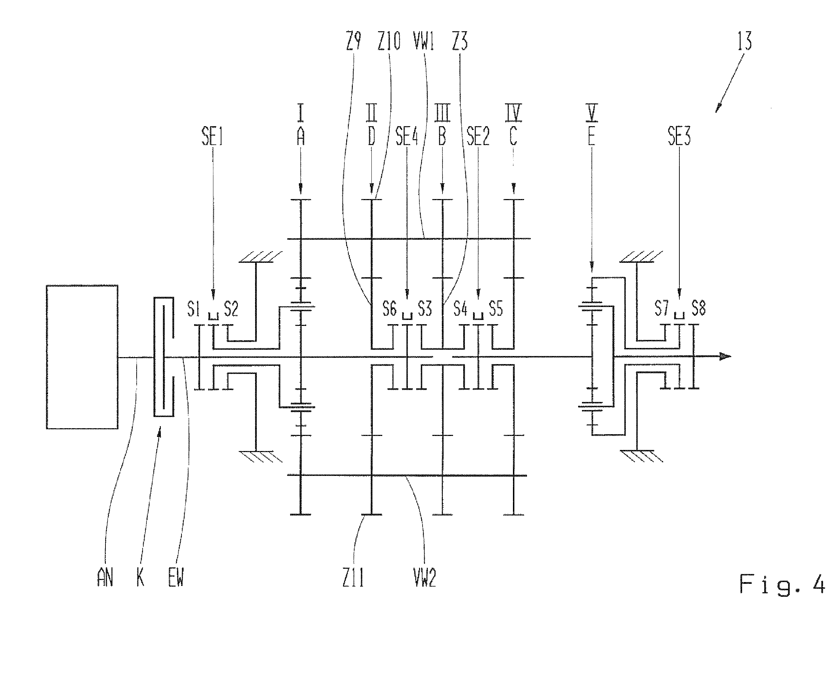

Ferner geht aus Fig. 4 eine dritte bevorzugte Ausführungsform eines Stufengetriebes 13 hervor. Im Unterschied zu dem Stufengetriebe 1 aus Fig. 1 ist hierbei die Übersetzungsstufe B in der dritten Radebene III und die Übersetzungsstufe C in der vierten Radebene IV platziert, während axial zwischen der Übersetzungsstufe A und der Übersetzungsstufe B die Übersetzungsstufe D in der zweiten Radebene II liegend angeordnet ist. Des Weiteren ist das Stirnrad Z9 der Übersetzungsstufe D drehbar auf der Eingangswelle EW gelagert und wird bei Betätigung des Schaltelements S6 drehfest mit der Eingangswelle EW gekoppelt, so dass in der Folge eine Drehbewegung der Eingangswelle EW mittels der Übersetzungsstufe D durch Zahneingriff des Stirnrades Z9 mit den Stirnrädern Z10 und Z11 auf die beiden parallel verlaufenden Vorgelegewellen VW1 und VW2 übersetzt wird. Hierbei ist das Schaltelement S6 mit dem Schaltelement S3, über welches das Stirnrad Z3 der Übersetzungsstufe B drehfest mit der Eingangswelle EW koppelbar ist, in einer Schalteinrichtung SE4 zusammengefasst. Im Übrigen entspricht die Ausgestaltung des Stufengetriebes 13 aus Fig. 4 dem Stufengetriebe 1 aus Fig. 1.

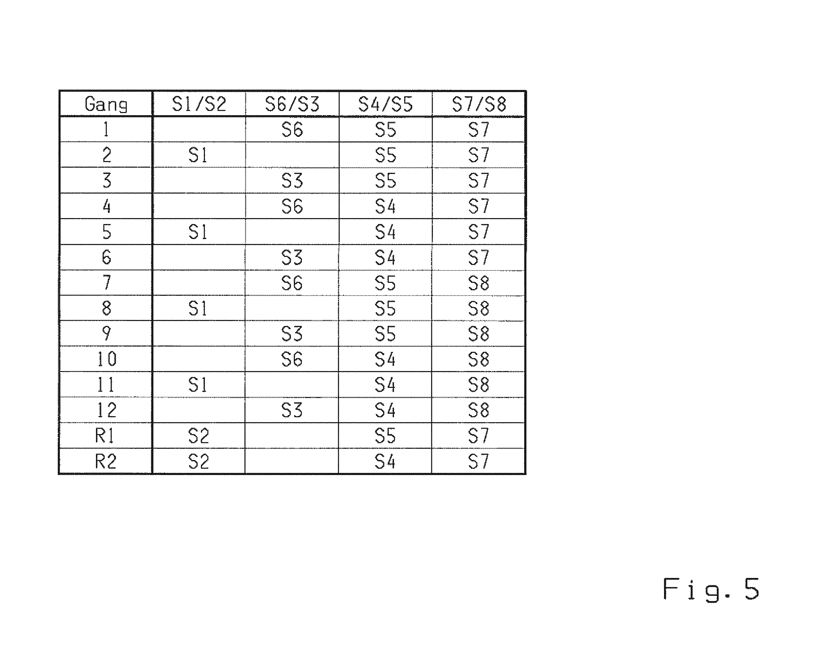

Aus Fig. 5 ist nun ein beispielhaftes Schaltschema ersichtlich, welches sich über das Stufengetriebe 13 aus Fig. 4 verwirklichen lässt. Hierbei werden die Schaltelemente S1 und S2, die Schaltelemente S6 und S3, die Schaltelemente S4 und S5, sowie die Schaltelemente S7 und S8 jeweils alternativ zueinander betätigt. Des Weiteren ist nach einer Betätigung der je zugehörigen Schaltelemente jedes Ganges die Eingangswelle EW über das Lastschaltelement K mit der Antriebsseite AN zu koppeln, um eine Drehbewegung der Antriebsseite AN auf die Eingangswelle EW zu übertragen. Während eines Gangwechsels ist das Lastschaltelement K jedoch zu öffnen, bis die jeweils zugehörigen Schaltelemente betätigt worden sind. Infolge dessen ist ein Gangwechsel bei dem Stufengetriebe 13 nur unter Unterbrechung der Zugkraft möglich.

Ein erster Vorwärtsgang ergibt sich nun durch Betätigen der Schaltelemente S6, S5 und S7, während zum Schalten eines zweiten Vorwärtsganges die Schaltelemente S1, S5 und S7 anzusteuern sind. Des Weiteren ist ein dritter Vorwärtsgang durch Betätigen der Schaltelemente S3, S5 und S7 darstellbar, sowie ein vierter Vorwärtsgang durch Ansteuern der Schaltelemente S6, S4 und S7. Ein fünfter Vorwärtsgang wird geschaltet, indem die Schaltelemente S1, S4 und S7 betätigt werden, wohingegen zur Darstellung eines sechsten Vorwärtsganges die Schaltelemente S3, S4 und S7 anzusteuern sind. Ferner ergibt sich ein siebter Vorwärtsgang dadurch, dass die Schaltelemente S6, S5 und S8 in einem betätigten Zustand überführt werden, während zur Darstellung eines achten Vorwärtsganges die Schaltelemente S1, S5 und S8 zu betätigen sind. Ein neunter Vorwärtsgang wird dargestellt, indem die Schaltelemente S3, S5 und S8 betätigt werden, während ein zehnter Vorwärtsgang durch Ansteuern der Schaltelemente S6, S4 und S8 schaltbar ist. Schließlich ergibt sich ein elfter Vorwärtsgang durch Betätigen der Schaltelemente S1, S4 und S8 und ein zwölfter Vorwärtsgang durch Ansteuern der Schaltelemente S3, S4 und S8.

Hingegen wird ein erster Rückwärtsgang durch Ansteuern der Schaltelemente S2, S5 und S7 dargestellt, sowie ein zweiter Rückwärtsgang mittels Betätigen der Schaltelemente S2, S4 und S7.

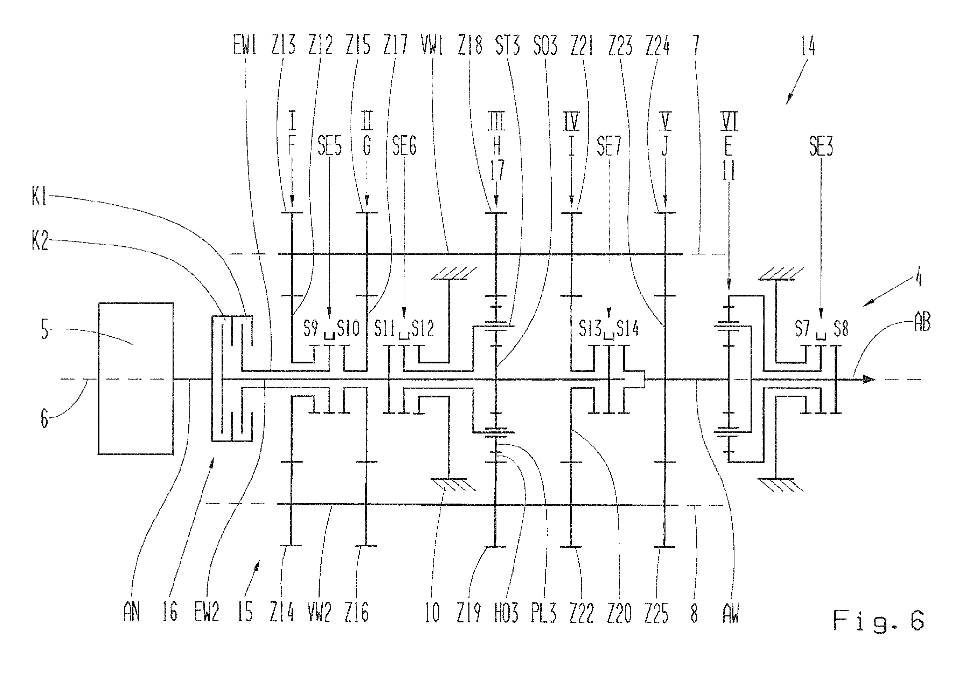

Ferner ist aus Fig. 6 eine vierte Ausführungsform eines erfindungsgemäßen Stufengetriebes 14 ersichtlich. Dabei ist auch dieses Stufengetriebe 14 wiederum in Gruppenbauweise ausgeführt, wobei im Unterschied zu dem Stufengetriebe 1 aus Fig. 1 zwischen der mit der Brennkraftmaschine 5 in Verbindung stehenden Antriebsseite AN und der Bereichsgruppe 4 eine Hauptgruppe 15 vorgesehen ist, welche nach Art eines Doppelkupplungsgetriebes ausgestaltet ist. Dementsprechend setzt sich die Hauptgruppe 15 aus zwei Teilgetrieben zusammen, die über je eine Eingangswelle EW1 und EW2 verfügen. Die beiden Eingangswellen EW1 und EW2 sind dabei, wie auch eine Ausgangswelle AW, jeweils koaxial zu der Hauptwellenachse 6 vorgesehen. Wie des Weiteren aus Fig. 6 zu erkennen ist, ist die Eingangswelle EW1 hierbei als Getriebehohlwelle ausgestaltet, zu welcher die als Getriebezentralwelle ausgebildete Eingangswelle EW2 koaxial verläuft. Die Antriebsseite AN kann nun einerseits mit der Eingangswelle EW1 über ein Lastschaltelement K1 und andererseits mit der Eingangswelle EW2 über ein Lastschaltelement K2 verbunden werden, wobei die beiden Lastschaltelemente K1 und K2 in einer Doppelkupplung 16 zusammengefasst sind. Diese Doppelkupplung 16 ist dabei bevorzugt als nasslaufende Doppelkupplung ausgestaltet, kann bei niedrigen zu übertragenden Drehmomenten aber auch trockenlaufend ausgeführt sein.

Parallel zu den Eingangswellen EW1 und EW2 und auch der Ausgangswelle AW sind wiederum zwei Vorgelegewellen VW1 und VW2 auf parallel zur Hauptwellenachse 6 vorgesehenen Vorgelegeachsen 7 und 8 platziert. Diese Vorgelegewellen VW1 und VW2 können dabei mit der Eingangswelle EW1 über zwei Übersetzungsstufen F und G, mit der Eingangswelle EW2 über zwei Übersetzungsstufen H und I, sowie mit der Ausgangswelle AW mittels einer Übersetzungsstufe J jeweils gekoppelt werden.

In einer ersten Radebene I des Stufengetriebes 14 ist hierbei die Übersetzungsstufe F vorgesehen, die ein drehbar auf der Eingangswelle EW1 gelagertes Stirnrad Z12 aufweist, wobei dieses Stirnrad Z12 sowohl mit einem drehfest auf der Vorgelegewelle VW1 angeordneten Stirnrad Z13 als auch mit einem drehfest auf der Vorgelegewelle VW2 platzierten Stirnrad Z14 im Zahneingriff steht. Zur Übersetzung einer Drehbewegung der Eingangswelle EW1 auf die beiden Vorgelegewellen VW1 und VW2 kann das Stirnrad Z12 über ein Schaltelement S9 an der Eingangswelle EW1 festgesetzt werden.

Benachbart zu der Übersetzungsstufe F liegend ist in einer zweiten Radebene II des Stufengetriebes 14 die Übersetzungsstufe G vorgesehen, die ein auf der Vorgelegewelle VW1 drehfest vorgesehenes Stirnrad Z15 und ein drehfest auf der Vorgelegewelle VW2 platziertes Stirnrad Z16 umfasst. Die beiden Stirnräder Z15 und Z16 stehen jeweils mit einem zwischenliegenden Stirnrad Z17 im Zahneingriff, welches drehbar auf der Eingangswelle EW2 gelagert ist und über ein Schaltelement S10 drehfest mit der Eingangswelle EW1 verbunden werden kann. Bei Betätigung des Schaltelements S10 wird dementsprechend ein Leistungsfluss ausgehend von der Eingangswelle EW1 auf die beiden Vorgelegewellen VW1 und VW2 aufgeteilt.

In einer dritten Radebene III des Stufengetriebes 14 ist des Weiteren die Übersetzungsstufe H vorgesehen, welche ähnlich der Übersetzungsstufe A aus Fig. 1 als verschachtelte Übersetzungsstufe ausgestaltet ist. So umfasst die Übersetzungsstufe H einen Planetensatz 17, welcher koaxial zu der Hauptwellenachse 6 vorgesehen und im Zusammenspiel mit Stirnrädern Z18 und Z19 eine Drehbewegung der Eingangswelle EW2 auf die beiden Vorgelegewellen VW1 und VW2 übersetzen kann. Der Planetensatz 17 umfasst dabei ein Sonnenrad SO3, das drehfest auf der Eingangswelle EW2 platziert ist und über mehrere Planetenräder PL3 mit einem Hohlrad H03 des Planetensatzes 17 in Verbindung steht. Dieses Hohlrad H03 steht dabei zum einen an einer Innenverzahnung mit den Planetenrädern PL3 im Zahneingriff und verfügt zudem über eine Außenverzahnung, über welche das Hohlrad H03 sowohl mit dem Stirnrad Z18 als auch mit dem Stirnrad Z19 kämmt. Dabei ist das Stirnrad Z18 drehfest auf der Vorgelegewelle VW1 und das Stirnrad Z19 drehfest auf der Vorgelegewelle VW2 angeordnet.

Die Planetenräder PL3 werden über einen Planetensteg ST3 geführt, welcher zum einen über ein Schaltelement S11 drehfest mit der Eingangswelle EW2 gekoppelt werden kann und zum anderen mittels eines Schaltelements S12 am Getriebegehäuse 10 des Stufengetriebes 14 festsetzbar ist. Wie schon bei der Übersetzungsstufe A des Stufengetriebes 1 aus Fig. 1, bewirkt eine Betätigung des Schaltelements S11 und eine damit einhergehende Koppelung des Planetensteges ST3 mit der Eingangswelle EW2 einen verblockten Umlauf des Planetensteges ST3 gemeinsam mit dem Sonnenrad S03. Hierbei wird ein Vorwärtsgang des Stufengetriebes 14 definiert. Hingegen führt die Festsetzung des Planetensteges ST3 am Getriebegehäuse 10 zu einer entgegengesetzten Drehbewegung des Hohlrades H03 und damit auch der Stirnräder Z18 und Z19, so dass durch diese entgegengesetzt orientierte Drehbewegung ein Rückwärtsgang der Hauptgruppe 15 dargestellt wird.

Benachbart zu der Übersetzungsstufe H ist in einer vierten Radebene IV die Übersetzungsstufe I vorgesehen, welche hierbei durch ein drehbar auf der Eingangswelle EW2 gelagertes Stirnrad Z20, sowie zwei mit diesem Stirnrad Z20 jeweils im Zahneingriff stehende Stirnräder Z21 und Z22 gebildet ist. Das Stirnrad Z20 kann über ein Schaltelement S13 an der Eingangswelle EW2 festgesetzt werden, so dass ein Leistungsfluss im Zusammenspiel mit dem drehfest auf der Vorgelegewelle VW1 vorgesehenen Stirnrad Z21 und dem drehfest auf der Vorgelegewelle VW2 platzierten Stirnrad Z22 auf die beiden Vorgelegewellen VW1 und VW2 aufgeteilt wird.

Die Ausgangswelle AW des Stufengetriebes 14 ist, wie des Weiteren aus Fig. 6 zu erkennen ist, über die Übersetzungsstufe J permanent mit den beiden Vorgelegewellen VW1 und VW2 gekoppelt. Die Übersetzungsstufe J ist dabei in einer fünften Radebene V des Stufengetriebes 14 vorgesehen und umfasst ein drehfest auf der Ausgangswelle AW vorgesehenes Stirnrad Z23, das sowohl mit einem drehfest auf der Vorgelegewelle VW1 angeordneten Stirnrad Z24 als auch mit einem verdrehfest auf der Vorgelegewelle VW2 platzierten Stirnrad Z25 kämmt. Infolge dessen wird ein auf die beiden Vorgelegewellen VW1 und VW2 aufgeteilter Leistungsfluss stets über die Übersetzungsstufe J wieder auf der Ausgangswelle AW zusammengeführt. Abgesehen davon kann die Ausgangswelle AW aber noch über ein Schaltelement S14 direkt drehfest mit der Eingangswelle EW2 verbunden werden, wodurch ein starrer Durchtrieb von der Eingangswelle EW2 auf die Ausgangswelle AW stattfindet.

In einer sechsten Radebene VI ist schließlich noch die Bereichsgruppe 4 vorgesehen, welche durch die Übersetzungsstufe E gebildet ist. Die Übersetzungsstufe E ist hierbei gleich aufgebaut, wie bei dem Stufengetriebe 1 aus Fig. 1, also durch eine Planetenstufe 11 gebildet.

Die Schaltelemente S7 bis S14 sind auch bei dem Stufengetriebe 14 wiederum bevorzugt als Sperrsynchronisationen ausgestaltet, über welche das jeweilige Stirnrad Z12 bzw. Z17 bzw. Z20 oder aber die jeweilige Getriebekomponente des Planetensatzes 17 bzw. des Planetensatzes 11 nach Abbau von Drehzahldifferenzen drehfest mit der jeweiligen Welle EW1 bzw. EW2 bzw. AB verbunden wird. Im Falle des Schaltelements S14 werden hingegen die Eingangswelle EW2 und die Ausgangswelle AW nach Abbau von Drehzahldifferenzen drehfest miteinander gekoppelt. Allerdings ist auch im Falle des Stufengetriebes 14 prinzipiell eine Ausgestaltung der Schaltelemente S7 bis S14 als anderweitige formschlüssige Schaltelemente oder aber auch als kraftschlüssige Schaltelemente, wie beispielsweise Lamellenkupplungen, denkbar.

Wie aus Fig. 6 zu erkennen ist, sind das Schaltelement S7 und das Schaltelement S8 erneut zu der Schalteinrichtung SE3 zusammengefasst, wobei des Weiteren auch das Schaltelement S9 und das Schaltelement S10 zu einer Schalteinrichtung SE5, das Schaltelement S11 und das Schaltelement S12 zu einer Schalteinrichtung SE6, sowie das Schaltelement S13 und das Schaltelement S14 zu einer Schalteinrichtung SE7 zusammengelegt sind. In den einzelnen Schalteinrichtungen SE3 und SE5 bis SE7 wird dabei jeweils über eine je gemeinsame Schaltmuffe entweder in einer ersten Schaltstellung das jeweils eine Schaltelement S7 bzw. S9 bzw. S11 bzw. S13 oder in einer zweiten Schaltstellung das jeweils andere Schaltelement S8 bzw. S10 bzw. S12 bzw. S14 angesteuert.

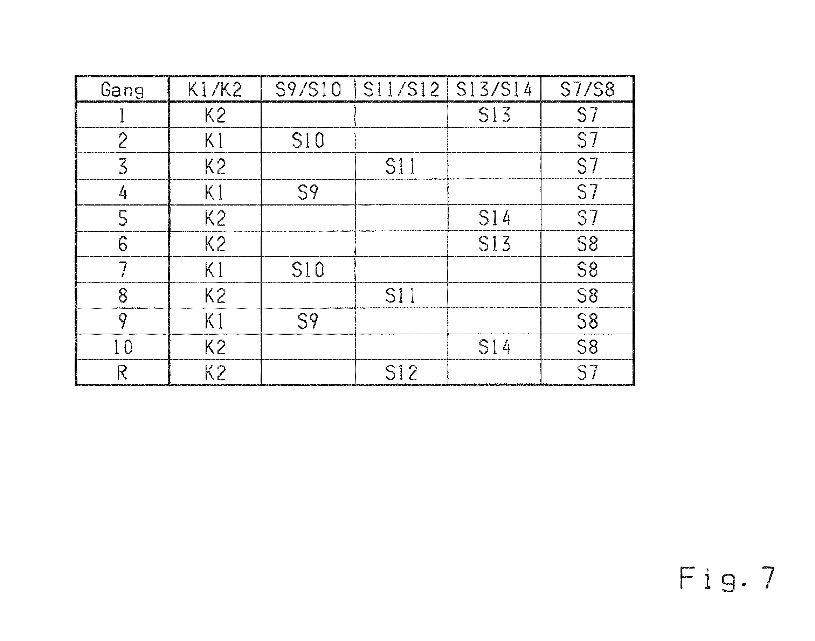

Aus Fig. 7 geht nun ein beispielhaftes Schaltschema des Stufengetriebes 14 hervor. Insgesamt sind dabei zehn Vorwärtsgänge sowie ein Rückwärtsgang schaltbar. Die Vorwärtsgänge sind hierbei, abgesehen von einem Wechsel von einem fünften Vorwärtsgang in einen sechsten Vorwärtsgang, bei welchem eine Schaltung in der Bereichsgruppe 4 vorgenommen werden muss, unter Last schaltbar. Dies wird dadurch erreicht, dass bei Fahren in einem Gang und bei Führen des Kraftflusses über eines der beiden Teilgetriebe in dem jeweils anderen Teilgetriebe schon die an der Darstellung eines nachfolgenden Ganges Beteiligten der Schaltelemente S9 bis S14 vorgewählt werden und zum letztendlichen Umschalten nur noch das Lastschaltelement K1 bzw. K2 des einen Teilgetriebes geöffnet und unmittelbar darauf das Lastschaltelement K2 bzw. K1 des anderen Teilgetriebes geschlossen wird.

Vorliegend wird ein erster Vorwärtsgang durch Schließen des Lastschaltelements K2, sowie Betätigen der Schaltelemente S13 und S7 dargestellt, wohingegen sich ein zweiter Vorwärtsgang durch Schließen des Lastschaltelements K1 und Ansteuern der Schaltelemente S10 und S7 ergibt. Ein weiterer, dritter Vorwärtsgang wird dadurch geschaltet, dass zum einen das Lastschaltelement K2 geschlossen und zum anderen die Schaltelemente S11 und S7 in einen betätigten Zustand überführt werden. Ein vierter Vorwärtsgang ist des Weiteren durch Schließen des Lastschaltelements K1 und Betätigen der Schaltelemente S9 und S7 darstellbar, während ein fünfter Vorwärtsgang durch Schließen des Lastschaltelements K2 und Ansteuern der Schaltelemente S14 und S7 definiert wird. Ferner ergibt sich ein sechster Vorwärtsgang, indem einerseits erneut das Lastschaltelement K2 geschlossen und andererseits die Schaltelemente S13 und S8 in einen betätigten Zustand überführt werden. Ein siebter Vorwärtsgang wird durch Schließen des Lastschaltelements K1 und Ansteuern der Schaltelemente S10 und S8 geschaltet, wohingegen ein achter Vorwärtsgang über das Lastschaltelement K2 und die Schaltelemente S11 und S8 darstellbar ist. Schließlich ergibt sich noch ein neunter Vorwärtsgang durch Betätigen des Lastschaltelements K1 sowie der Schaltelemente S9 und S8, sowie ein zehnter Vorwärtsgang durch Schließen des Lastschaltelements K2 und Ansteuern der Schaltelemente S14 und S8. Ein Rückwärtsgang des Stufengetriebes 14 kann durch Schließen des Lastschaltelements K2, sowie Betätigen der Schaltelemente S12 und S7 geschaltet werden.

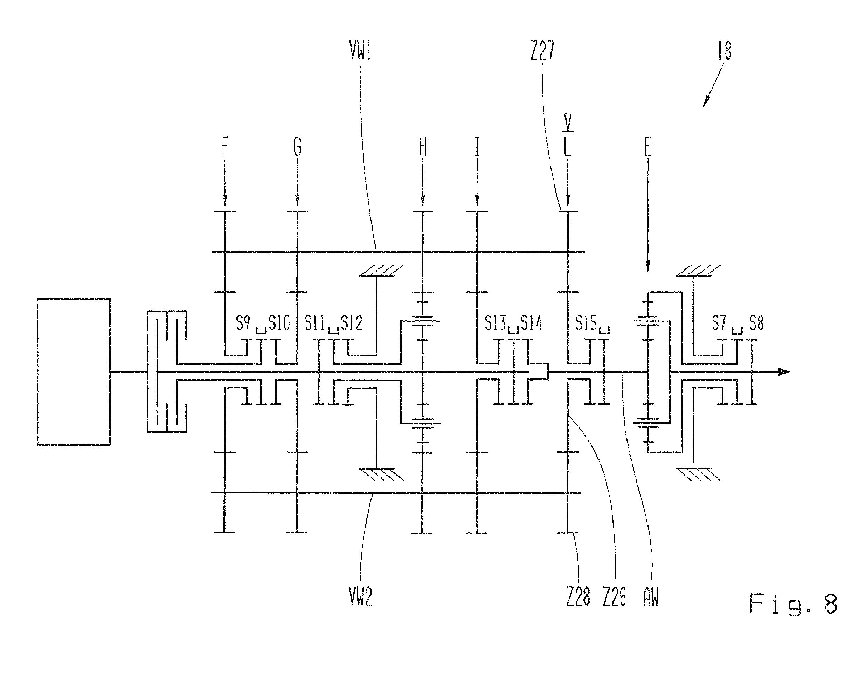

Aus Fig. 8 geht eine fünfte bevorzugte Ausgestaltung eines Stufengetriebes 18 hervor, wobei dieses Stufengetriebe 18 weitestgehend dem Stufengetriebe 14 aus Fig. 6 entspricht. Einziger Unterschied zu dem Stufengetriebe 14 ist, dass in einer fünften Radebene V eine Übersetzungsstufe L vorgesehen ist, deren ausgangswellenseitiges Stirnrad Z26 drehbar auf der Ausgangswelle AW gelagert ist. Das Stirnrad Z26 kann nun mittels eines Schaltelements S15 an der Ausgangswelle AW festgesetzt werden und steht einerseits mit einem drehfest auf der Vorgelegewelle VW1 platzierten Stirnrad Z27 und andererseits mit einem verdrehfest auf der Vorgelegewelle VW2 vorgesehenen Stirnrad Z28 jeweils im Zahneingriff. Bei drehfester Anbindung des Stirnrades Z26 an der Ausgangswelle AW wird dabei nach einer Leistungsaufzweigung auf die beiden Vorgelegewellen VW1 und VW2 wieder eine Zusammenführung auf die Ausgangswelle AW vorgenommen. Im Übrigen entspricht das Stufengetriebe 18 gemäß Fig. 8 dem Stufengetriebe 14 aus Fig. 6.

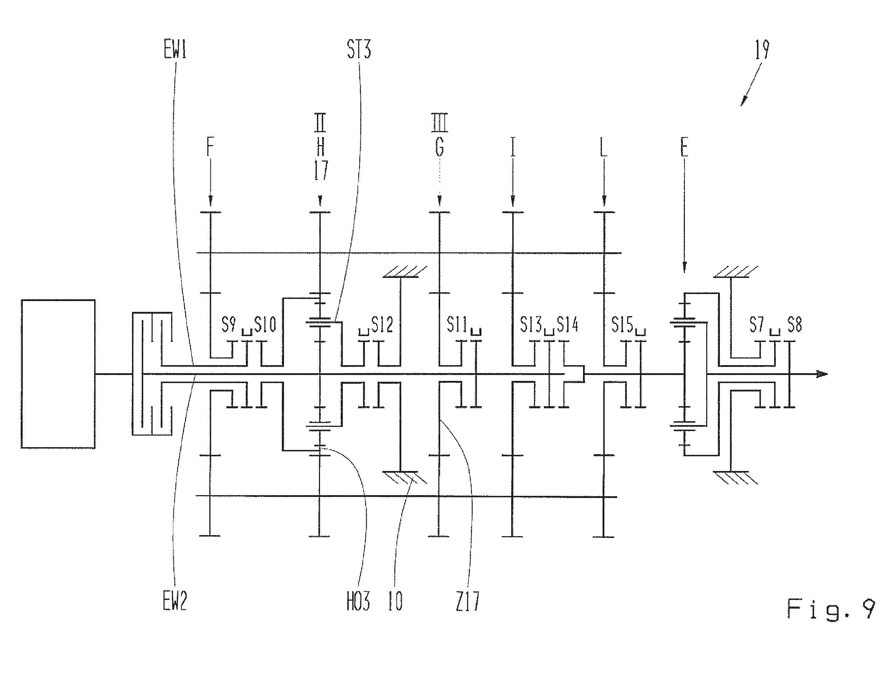

Fig. 9 zeigt eine schematische Darstellung einer sechsten Ausgestaltungsmöglichkeit eines Stufengetriebes 19. Dieses Stufengetriebe 19 entspricht dabei weitestgehend dem Stufengetriebe 18 der vorhergehenden Ausführungsform, wobei im Unterschied zu dem Stufengetriebe 18 aus Fig. 8 und auch dem Stufengetriebe 14 aus Fig. 6 die Übersetzungsstufe H nunmehr in einer zweiten Radebene II und die Übersetzungsstufe G in einer dritten Radebene III angeordnet ist. Dabei kann das Hohlrad H03 des Planetensatzes 17 nun mittels des Schaltelementes S10 drehfest mit der Eingangswelle EW1 gekoppelt werden, während der Planetensteg ST3 nach wie vor über das Schaltelement S12 am Getriebegehäuse 10 festgesetzt werden kann. Ferner kann das Stirnrad Z17 der Übersetzungsstufe G nunmehr über das Schaltelement S11 drehfest mit der Eingangswelle EW2 gekoppelt werden. Im Übrigen entspricht das Stufengetriebe 19 aus Fig. 9 dem Stufengetriebe 18 aus Fig. 8.

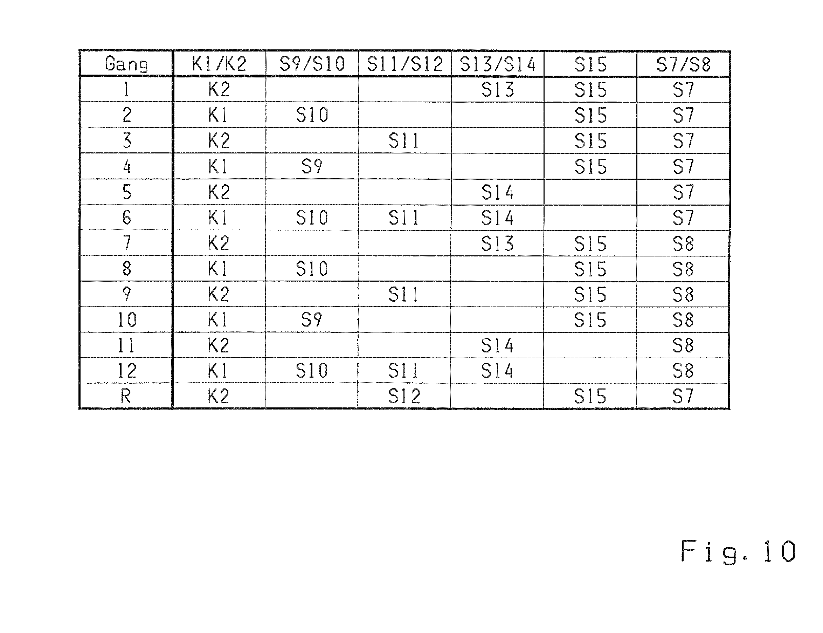

Ein beispielhaftes, über die beiden Stufengetriebe 18 und 19 jeweils darstellbares Schaltschema geht nun aus Fig. 10 hervor. Hierbei sind insgesamt zwölf Vorwärtsgänge sowie ein Rückwärtsgang schaltbar, wobei zwischen den Vorwärtsgängen, abgesehen von einem Gangwechsel zwischen dem sechsten und dem siebten Vorwärtsgang, ein Wechsel des Übersetzungsverhältnisses unter Last möglich ist. Dies wird, wie schon bei dem Schaltschema nach Fig. 7, durch einen entsprechenden Wechsel zwischen den Teilgetrieben ermöglicht.

Hierbei ist ein erster Vorwärtsgang durch Schließen des Lastschaltelements K2, sowie Betätigen der Schaltelemente S13, S15 und S7 schaltbar, wohingegen sich ein zweiter Vorwärtsgang durch Überführen des Lastschaltelements K1 in einen betätigten Zustand, sowie Ansteuerung der Schaltelemente S10, S15 und S7 ergibt. Des Weiteren kann ein dritter Vorwärtsgang dadurch geschaltet werden, dass das Lastschaltelement K2 geschlossen und die Schaltelemente S11, S15 und S7 angesteuert werden, wobei ein vierter Vorwärtsgang durch Schließen des Lastschaltelements K1 und Betätigen der Schaltelemente S9, S15 und S7 darstellbar ist. Zudem wird ein fünfter Vorwärtsgang durch Schließen des Lastschaltelements K2 und Betätigen der Schaltelemente S14 und S7 definiert. Ein sechster Vorwärtsgang ergibt sich dann durch Schließen des Lastschaltelements K1 und Ansteuern der Schaltelemente S10, S11, S14 und S7, wobei zur Darstellung eines siebten Vorwärtsganges das Lastschaltelement K2 zu betätigen und die Schaltelemente S13, S15 und S8 anzusteuern sind. Zum Schalten eines achten Vorwärtsganges ist dann das Lastschaltelement K1 zu schließen und zudem eine Betätigung der Schaltelemente S10, S15 und S8 vorzunehmen. Ferner lässt sich ein neunter Vorwärtsgang dadurch darstellen, dass das Lastschaltelement K2 in einen betätigten Zustand überführt und die Schaltelemente S11, S15 und S8 betätigt werden, wohingegen in einem zehnten Vorwärtsgang das Lastschaltelement K1 zu schließen und die Schaltelemente S9, S15 und S8 anzusteuern sind. Schließlich ergibt sich ein elfter Vorwärtsgang durch Betätigen des Lastschaltelements K2, sowie der Schaltelemente S14 und S8, während hinsichtlich eines zwölften Vorwärtsganges das Lastschaltelement K1 zu schließen ist und die Schaltelemente S10, S11, S14 und S8 anzusteuern sind. Ein Rückwärtsgang des Stufengetriebes 18 und auch des Stufengetriebes 19 wird hingegen durch Schließen des Lastschaltelements K2 und Betätigen der Schaltelemente S12, S15 und S7 dargestellt.

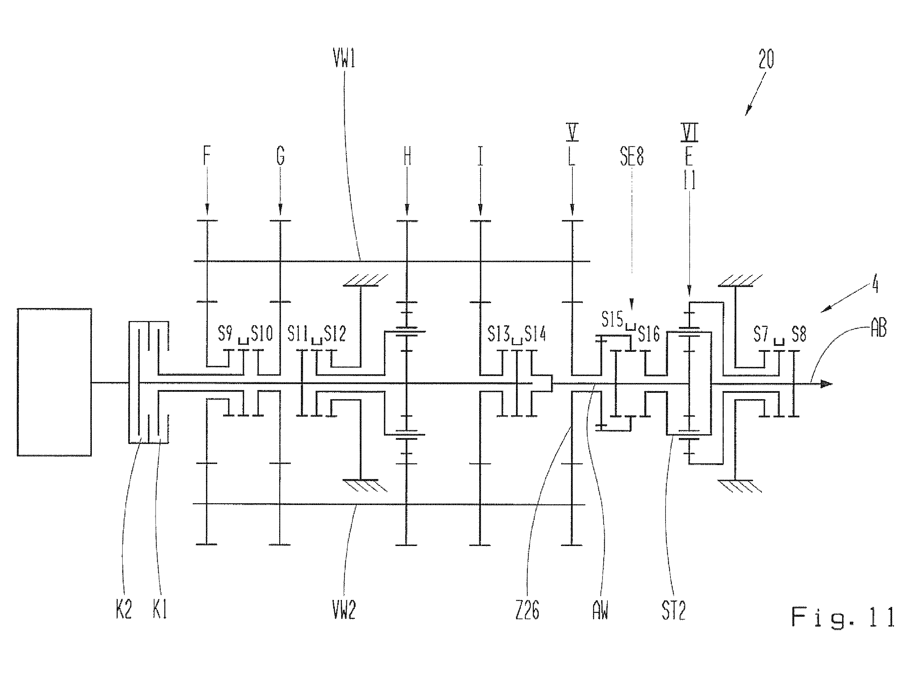

Eine siebte bevorzugte Ausführungsform eines Stufengetriebes 20 geht aus Fig. 11 hervor, wobei dieses Stufengetriebe 20 dabei weitestgehend dem Stufengetriebe 18 aus Fig. 8 entspricht. Im Unterschied zum Stufengetriebe 18 aus Fig. 8 kann das Stirnrad Z26 der in der fünften Radebene V liegenden Übersetzungsstufe L neben einer drehfesten Koppelbarkeit mit der Ausgangswelle AW mittels des Schaltelements S15 auch noch über ein Schaltelement S16 drehfest mit dem Steg ST2 der Übersetzungsstufe E verbunden werden. Das Stirnrad Z26 kann also einerseits entweder drehfest an der Ausgangswelle AW angebunden oder aber drehfest mit dem mit der Abtriebsseite AB verbundenen Planetensteg ST2 des Planetensatzes 11 gekoppelt werden. Es können also über die Übersetzungsstufe L einerseits Drehbewegungen der beiden Vorgelegewellen VW1 und VW2 auf die zentrisch laufende Ausgangswelle AW übersetzt werden, wobei eine Drehbewegung der Ausgangswelle AW dann im weiteren Verlauf mittels der nachgeschalteten Übersetzungsstufe E auf die Abtriebsseite AB übertragen wird. Andererseits kann eine direkte Übersetzung der Drehbewegungen der Vorgelegewellen VW1 und VW2 auf die Abtriebsseite AB vorgenommen werden, ohne dass der Kraftfluss über die Ausgangswelle AW geführt wird. In der Folge kann auch trotz der nachgeschalteten Bereichsgruppe 4 in Form der Übersetzungsstufe E eine volle Lastschaltbarkeit des Stufengetriebes 20 erzielt werden, da zwischen zwei über die Bereichsgruppe 4 darstellbaren Bereichsübersetzungen eine direkte Koppelung der Abtriebsseite AB mit den Vorgelegewellen VW1 und VW2 mittels der Übersetzungsstufe L vorgenommen wird. Das Schaltelement S15 und das Schaltelement S16 sind hierbei zu einer Schalteinrichtung SE8 zusammengefasst, die als Doppelsynchronisierung ausgestaltet ist und über eine Schaltmuffe verfügt, welche aus einer Neutralstellung entweder in eine das Schaltelement S15 betätigende oder in eine das Schaltelement S16 ansteuernde Schaltstellung bewegbar ist.

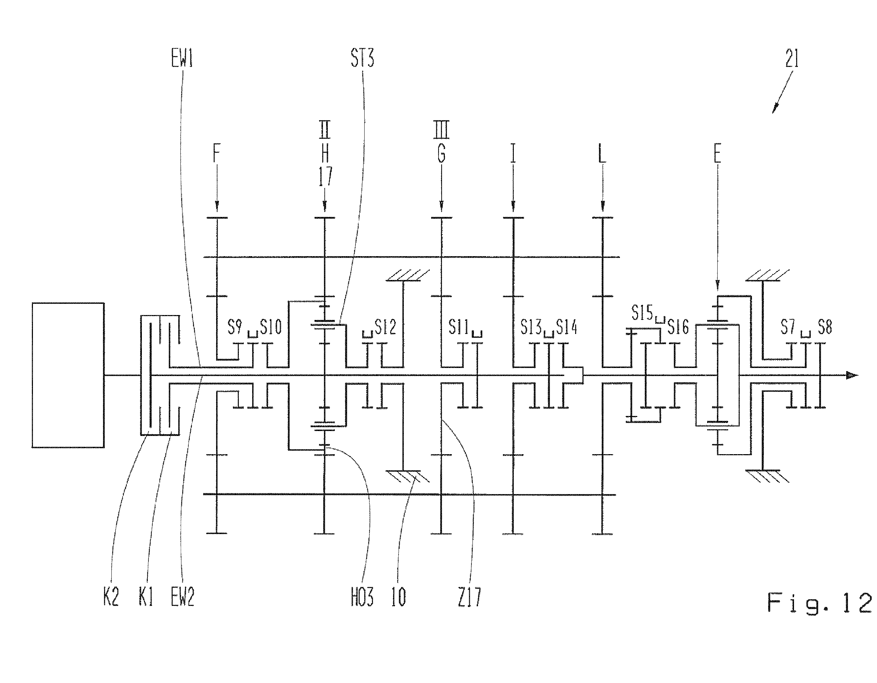

Fig. 12 zeigt eine weitere, achte Ausführungsform eines Stufengetriebes 21, welches hierbei weitgehend dem Stufengetriebe 20 der vorhergehenden Variante entspricht. Hierbei weicht das Stufengetriebe 21 in seiner Ausgestaltung von dem Stufengetriebe 20 aus Fig. 11 dahingehend ab, dass, wie schon bei dem Stufengetriebe 19 aus Fig. 9, die Übersetzungsstufe H in einer zweiten Radebene II und die Übersetzungsstufe G in einer dritten Radebene III vorgesehen ist. Erneut kann dabei das Hohlrad H03 des Planetensatzes 17 der Übersetzungsstufe H mittels des Schaltelements S10 drehfest mit der Eingangswelle EW1 gekoppelt werden, während der Planetensteg ST3 über das Schaltelement S12 am Getriebegehäuse 10 festsetzbar ist. Hinsichtlich der Übersetzungsstufe G kann das Stirnrad Z17 mittels des Schaltelements S11 drehfest mit der als Getriebezentralwelle ausgeführten Eingangswelle EW2 verbunden werden. Ansonsten entspricht das Stufengetriebe 21 dem Stufengetriebe 20 aus Fig. 11.

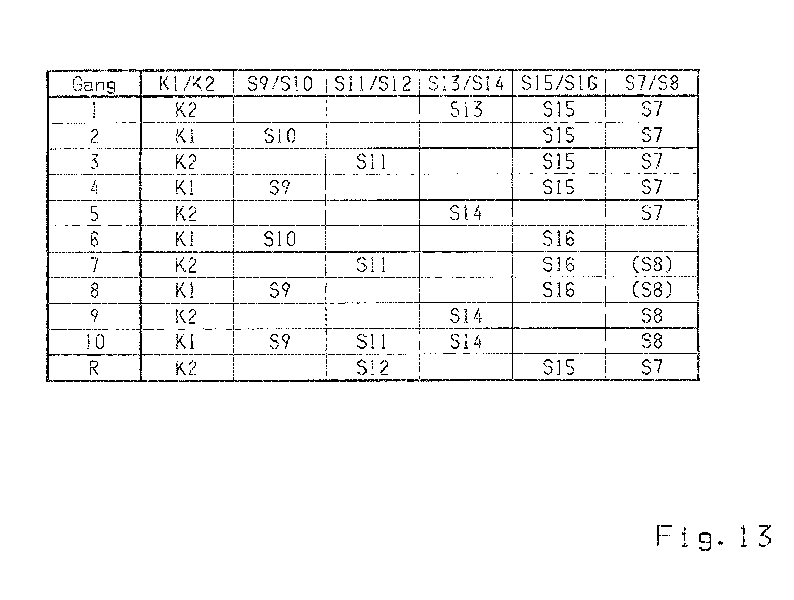

Aus Fig. 13 geht nun ein beispielhaftes Schaltschema hervor, welches sich sowohl durch das Stufengetriebe 20 aus Fig. 11 als auch durch das Stufengetriebe 21 aus Fig. 12 verwirklichen lässt. Hierbei sind insgesamt zehn Vorwärtsgänge sowie ein Rückwärtsgang darstellbar, wobei zwischen den Vorwärtsgängen unter Last gewechselt werden kann, indem beim Fahren in einem Gang des einen Teilgetriebes ein hierauf folgender Gang bereits in dem jeweils anderen Teilgetriebe des Stufengetriebes 20 bzw. 21 vorgewählt wird. Ein Wechsel zwischen den Gängen erfolgt dann nur noch durch Umschalten zwischen den Lastschaltelementen K1 und K2.

Ein erster Vorwärtsgang ergibt sich hierbei dadurch, dass das Lastschaltelement K2 geschlossen und zudem die Schaltelemente S13, S15 und S7 betätigt werden, wohingegen ein zweiter Vorwärtsgang durch Schließen des Lastschaltelements K1 und Ansteuern der Schaltelemente S10, S15 und S7 dargestellt werden kann. Ein dritter Vorwärtsgang kann dann geschaltet werden, indem das Lastschaltelement K2 geschlossen und die Schaltelemente S11, S15 und S7 betätigt werden, wohingegen ein vierter Vorwärtsgang mittels Schließen des Lastschaltelements K1 und Ansteuern der Schaltelemente S9, S15 und S7 darstellbar ist. Ferner ergibt sich ein fünfter Vorwärtsgang, indem zum einen das Lastschaltelement K2 geschlossen und zum anderen die Schaltelemente S14 und S7 betätigt werden. Ein sechster Vorwärtsgang wird dann durch Schließen des Lastschaltelements K1, sowie Betätigen der Schaltelemente S10 und S16 dargestellt, wohingegen zum Wechsel in einen siebten Vorwärtsgang das Lastschaltelement K2 zu schließen und die Schaltelemente S11 und S16 zu betätigen sind. Zum Schalten eines achten Vorwärtsganges sind dann das Lastschaltelement K1 und die Schaltelemente S9 und S16 in einen betätigten Zustand zu überführen, während hinsichtlich eines neunten Vorwärtsganges das Lastschaltelement K2 und die Schaltelemente S14 und S8 anzusteuern sind. Das Schaltelement S8 wird dabei entweder bereits im siebten Vorwärtsgang oder spätestens im achten Vorwärtsgang angesteuert, so dass ein Wechsel vom achten Vorwärtsgang in den neunten Vorwärtsgang unter Last vollzogen werden kann. Schließlich ergibt sich ein zehnter Vorwärtsgang, indem das Lastschaltelement K1 geschlossen und die Schaltelemente S9, S11, S14 und S8 betätigt werden. Der Rückwärtsgang wird hingegen durch Schließen des Lastschaltelements K2, sowie Betätigen der Schaltelemente S12, S15 und S7 dargestellt.

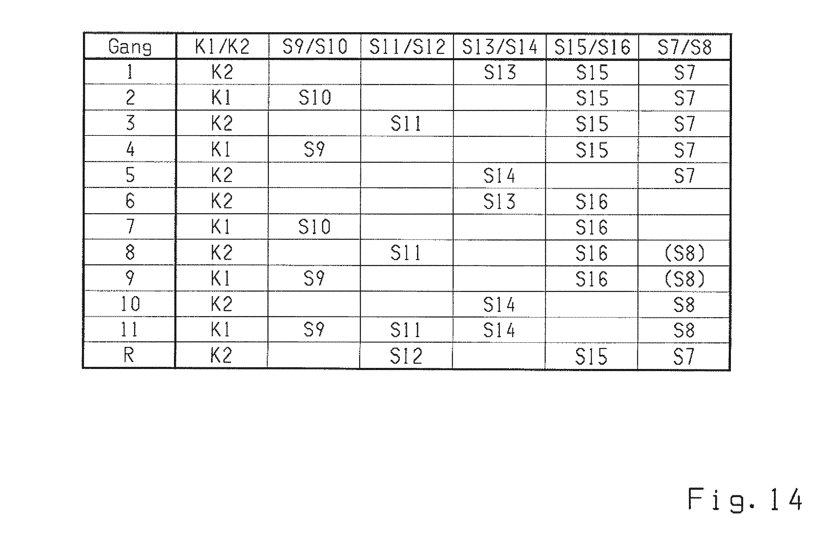

Des Weiteren geht aus Fig. 14 ein weiteres beispielhaftes Schaltschema hervor, welches sich sowohl durch das Stufengetriebe 20 aus Fig. 11 als auch durch das Stufengetriebe 21 aus Fig. 12 darstellen lässt. Im Unterschied zu dem Schaltschema nach Fig. 13 können hierbei elf Vorwärtsgänge und ein Rückwärtsgang geschaltet werden, wobei zwischen den elf Vorwärtsgängen jeweils unter Last gewechselt werden kann. Hierbei ist das Schalten unter Last erneut durch Vorwahl der entsprechenden Schaltelemente S7 bis S16 des jeweiligen Ganges und einen nachfolgenden Wechsel zwischen den Lastschaltelementen K1 und K2 realisierbar.

Dabei ergibt sich ein erster Vorwärtsgang, indem das Lastschaltelement K2 geschlossen, sowie die Schaltelemente S13, S15 und S7 betätigt werden, wohingegen ein zweiter Vorwärtsgang durch Schließen des Lastschaltelements K1 und Ansteuern der Schaltelemente S10, S15 und S7 schaltbar ist. Ein hierauf folgender dritter Vorwärtsgang wird durch Schließen des Lastschaltelements K2 und Betätigen der Schaltelemente S11, S15 und S7 dargestellt, während sich ein vierter Vorwärtsgang durch Schließen des Lastschaltelements K1 und Überführen der Schaltelemente S9, S15 und S7 in einen jeweils betätigten Zustand darstellen lässt. Ferner wird ein fünfter Vorwärtsgang geschaltet, indem zum einen das Lastschaltelement K2 geschlossen und zum anderen die Schaltelemente S14 und S7 betätigt werden, wobei zum Schalten in einen sechsten Vorwärtsgang erneut das Lastschaltelemente K2 zu schließen und die Schaltelemente S13 und S16 anzusteuern sind. Ein siebter Vorwärtsgang ergibt sich, indem das Lastschaltelement K1 geschlossen und die Schaltelemente S10 und S16 betätigt werden, während ein hierauf folgender achter Vorwärtsgang durch Betätigen des Lastschaltelements K2 und Ansteuern der Schaltelemente S11 und S16 geschaltet wird. Hierauf folgend kann ein neunter Vorwärtsgang dadurch dargestellt werden, dass das Lastschaltelement K1 geschlossen und die Schaltelemente S9 und S16 in einen betätigten Zustand überführt werden. Zudem ist entweder schon bei dem achten Vorwärtsgang oder aber spätestens bei dem neunten Vorwärtsgang bereits das Schaltelement S8 anzusteuern, so dass ein Gangwechsel vom neunten Vorwärtsgang in einen zehnten Vorwärtsgang ohne Zugkraftunterbrechung durchgeführt werden kann, indem die Schaltung in der nachgeschalteten Bereichsgruppe 4 bereits in den achten Vorwärtsgang oder in den neunten Vorwärtsgang vorverlegt wird. Der zehnte Vorwärtsgang ergibt sich dann, indem das Lastschaltelement K2 geschlossen und die Schaltelemente S14 und S8 betätigt werden, während in einen letzten, elften Vorwärtsgang durch Schließen des Lastschaltelements K1, sowie Ansteuern der Schaltelemente S9, S11, S14 und S8 geschaltet werden kann. Der einzige Rückwärtsgang ergibt sich, indem zum einen das Lastschaltelement K2 geschlossen und zum anderen die Schaltelemente S12, S15 und S7 betätigt werden.

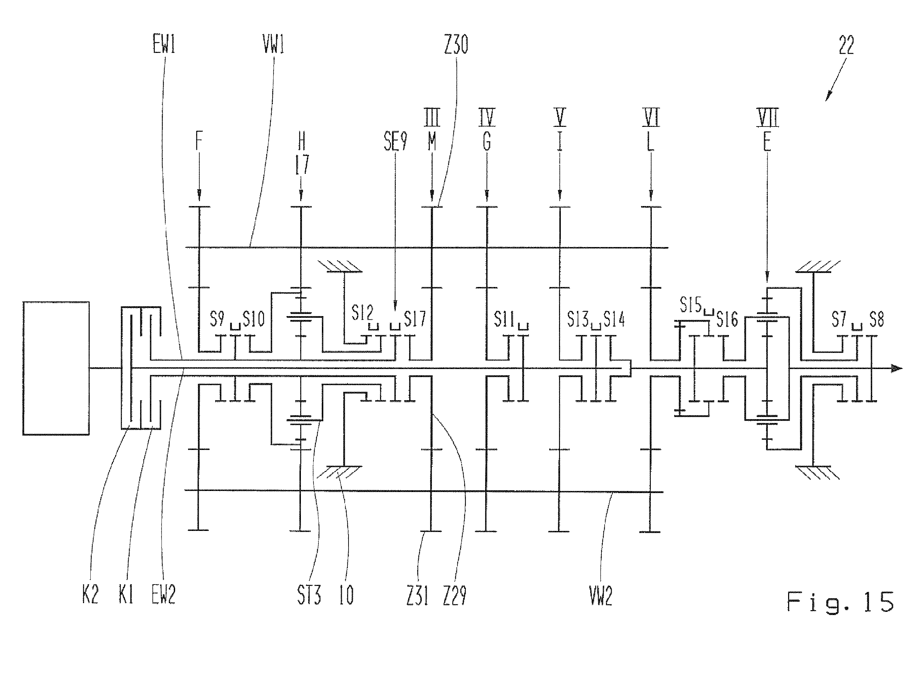

Aus Fig.15 geht ferner eine neunte Ausgestaltung eines Stufengetriebes 22 hervor, welches dabei im Wesentlichen dem Stufengetriebe 21 aus Fig. 12 entspricht. Das Stufengetriebe 22 unterscheidet sich jedoch dahingehend von dieser vorhergehenden Variante, dass in einer dritten Radebene III des Stufengetriebes 22 eine Übersetzungsstufe M vorgesehen ist, wohingegen die Übersetzungsstufe G in einer vierten Radebene IV, die Übersetzungsstufe I in einer fünften Radebene V, die Übersetzungsstufe L in einer sechsten Radebene VI und die Übersetzungsstufe E in einer siebten Radebene VII angeordnet ist. Ein Stirnrad Z29 der Übersetzungsstufe M ist dabei drehbar auf der Eingangswelle EW2 gelagert und kämmt zum einen mit einem drehfest auf der Vorgelegewelle VW1 vorgesehenen Stirnrad Z30 und zum anderen mit einem verdrehfest auf der Vorgelegewelle VW2 platzierten Stirnrad Z31. Ferner kann das Stirnrad Z29 mittels eines Schaltelements S17 drehfest mit der Eingangswelle EW1 verbunden werden, so dass in der Folge eine Drehbewegung der Eingangswelle EW1 über die Übersetzungsstufe M auf die beiden Vorgelegewellen VW1 und VW2 übersetzt wird. Unmittelbar benachbart zu dem Schaltelement S17 ist dabei das Schaltelement S12 vorgesehen, über welches der Planetensteg ST3 des Planetensatzes 17 am Getriebegehäuse 10 festsetzbar ist. Vorliegend sind das Schaltelement S12 und das Schaltelement S17 in einer Schalteinrichtung SE9 zusammengefasst, die über zwei Schiebemuffen verfügt, wobei diese beiden Schiebemuffen über einen gemeinsamen Aktuator verschiebbar sind und hierbei bei Verschiebung in die eine Schieberichtung eine Betätigung des Schaltelements S12 vorgenommen wird, wohingegen bei Verschiebung in eine entgegengesetzte Schieberichtung eine Ansteuerung des Schaltelements S17 eingeleitet wird. Im Übrigen entspricht das Stufengetriebe 22 aus Fig. 15 ansonsten dem Stufengetriebe 21 aus Fig. 12.

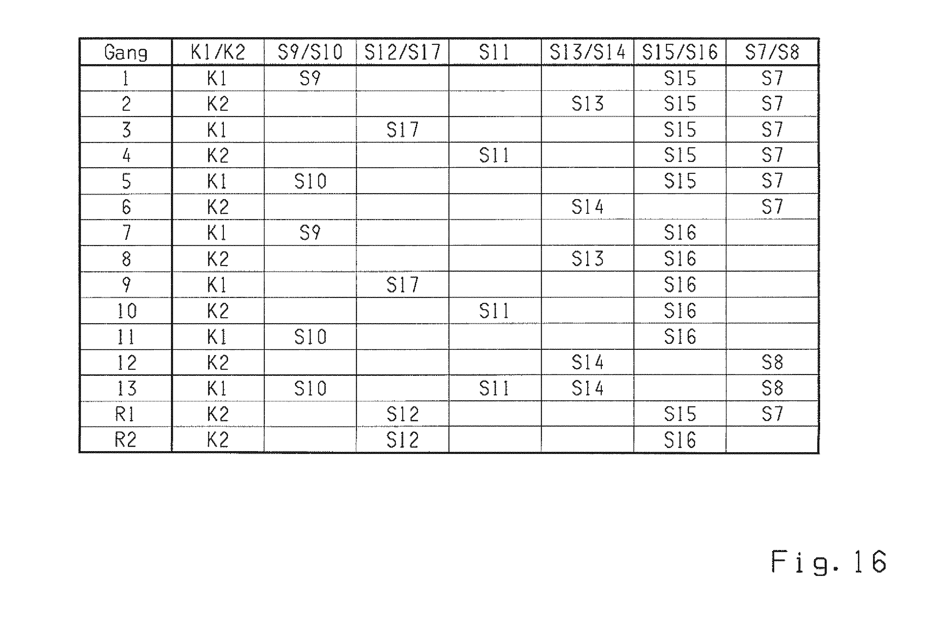

Ein beispielhaftes Schaltschema, welches über das Stufengetriebe 22 aus Fig. 15 darstellbar ist, geht nun aus Fig. 16 hervor. Wie hierbei zu erkennen ist, können insgesamt dreizehn Vorwärtsgänge und zwei Rückwärtsgänge geschaltet werden, wobei zwischen den dreizehn Vorwärtsgängen ein Gangwechsel unter Last vollzogen werden kann, indem stets zwischen den beiden über die je zugehörigen Lastschaltelementen K1 und K2 einbindbaren Teilgetrieben hin und her gewechselt wird.

Hierbei kann ein erster Vorwärtsgang dadurch geschaltet werden, dass das Lastschaltelement K1 geschlossen und die Schaltelemente S9, S15 und S7 betätigt werden, während sich ein zweiter Vorwärtsgang durch Schließen des Lastschaltelements K2 und durch Ansteuern der Schaltelemente S13, S15 und S7 ergibt. Ein weiterer, dritter Vorwärtsgang ist darstellbar, indem das Lastschaltelement K1 geschlossen, sowie die Schaltelemente S17, S15 und S7 in einen betätigten Zustand überführt werden. Ferner ergibt sich ein vierter Vorwärtsgang durch Schließen des Lastschaltelements K2 und Betätigen der Schaltelemente S11, S15 und S7, ein fünfter Vorwärtsgang durch Schließen des Lastschaltelements K1 und Ansteuern der Schaltelemente S10, S15 und S7. Zudem wird ein sechster Vorwärtsgang dadurch geschaltet, dass das Lastschaltelement K2 betätigt und die Schaltelemente S14 und S7 angesteuert werden. Ein weiterer, siebter Vorwärtsgang ergibt sich, indem das Lastschaltelement K1 geschlossen und die Schaltelemente S9 und S16 betätigt werden, während ein achter Vorwärtsgang durch Ansteuern des Lastschaltelements K2, sowie der Schaltelemente S13 und S16 darstellbar ist. Ein neunter Vorwärtsgang wird durch Schließen des Lastschaltelements K1, sowie Ansteuern der Schaltelemente S17 und S16 definiert, während in einen zehnten Vorwärtsgang durch Betätigen des Lastschaltelements K2, sowie der Schaltelemente S11 und S16 geschaltet werden kann. Hierauf folgend ergibt sich ein elfter Vorwärtsgang, indem zum einen wiederum das Lastschaltelement K1 geschlossen und zum anderen die Schaltelemente S10 und S16 betätigt werden. Schließlich wird ein zwölfter Vorwärtsgang durch Schließen des Lastschaltelements K2, sowie Ansteuern der Schaltelemente S14 und S8 dargestellt, wohingegen ein letzter, dreizehnter Vorwärtsgang mittels Betätigen des Lastschaltelements K1, sowie Ansteuern der Schaltelemente S10, S11, S14 und S8 geschaltet wird. Bei den beiden Rückwärtsgängen ist jeweils das Lastschaltelement K2 zu schließen, wobei bei einem ersten Vorwärtsgang dann zusätzlich die Schaltelemente S12, S15 und S7 und bei einem zweiten Rückwärtsgang die Schaltelemente S12 und S16 anzusteuern sind.

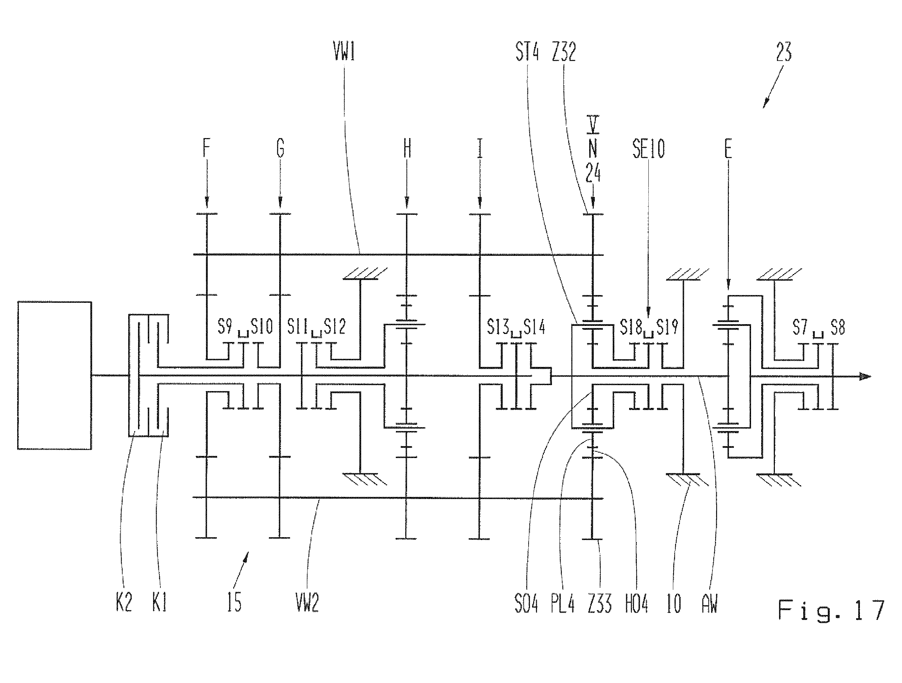

Fig. 17 zeigt ein Stufengetriebe 23 gemäß einer zehnten Ausgestaltungsmöglichkeit der Erfindung. Dieses Stufengetriebe 23 entspricht dabei weitestgehend dem in Fig. 8 dargestellten Stufengetriebe 18, wobei im Unterschied zu diesem Stufengetriebe 18 in einer fünften Radebene V eine Übersetzungsstufe N vorgesehen ist, welche als erfindungsgemäß verschachtelte Übersetzungsstufe ausgeführt ist. Die Übersetzungsstufe N umfasst hierbei einen Planetensatz 24, welcher im Zusammenspiel mit einem drehfest auf der Vorgelegewelle VW 1 vorgesehenen Stirnrad Z32 und einem verdrehfest auf der Vorgelegewelle VW2 angeordneten Zahnrad Z33 die Verschachtelung der Übersetzungsstufe N ausbildet. Dabei ist ein Planetensteg ST4 des Planetensatzes 24 drehfest mit der Ausgangswelle AW verbunden und führt Planetenräder PL4, die einerseits mit einem Sonnenrad S04 und andererseits mit einem Hohlrad H04 des Planetensatzes 24 im Zahneingriff stehen. Das Hohlrad H04 ist dabei zudem mit einer Außenverzahnung versehen, über welche das Hohlrad H04 sowohl mit dem Stirnrad Z32 als auch mit dem Stirnrad Z33 kämmt.

Ferner ist das Sonnenrad S04 des Planetensatzes 24 drehbar auf der Ausgangswelle AW gelagert und kann einerseits über ein Schaltelement S18 drehfest mit dem Planetensteg ST4 gekoppelt und andererseits über ein Schaltelement S19 am Getriebegehäuse 10 festgesetzt werden. Hierdurch können zwei unterschiedliche Übersetzungen von Drehbewegungen der Vorgelegewellen VW1 und VW2 auf die Ausgangswelle AW dargestellt werden, indem bei Betätigung des Schaltelements S18 das Sonnenrad S04 verblockt mit dem Planetensteg ST4 umläuft und ein erstes Übersetzungsverhältnis definiert wird, während bei Betätigung des Schaltelements S19 das Sonnenrad S04 stillgesetzt wird und in der Folge durch Ausgleichsbewegungen der Planetenräder PL4 eine langsamere Drehbewegung des Planetensteges ST4 hervorgerufen wird. Bei Betätigung des Schaltelements S19 können hierbei entsprechende Kriechgänge der Hauptgruppe 15 definiert werden. Wie in Fig. 17 zudem zu erkennen ist, sind das Schaltelement S18 und das Schaltelement S19 zu einer Schalteinrichtung SE10 zusammengefasst und verfügen dementsprechend über eine gemeinsame Schaltmuffe, welche bei Bewegung aus einer Neutralstellung entweder das Schaltelement S18 oder das Schaltelement S19 betätigt. Im Übrigen entspricht das Stufengetriebe 23 ansonsten dem Stufengetriebe 18 aus Fig. 8.

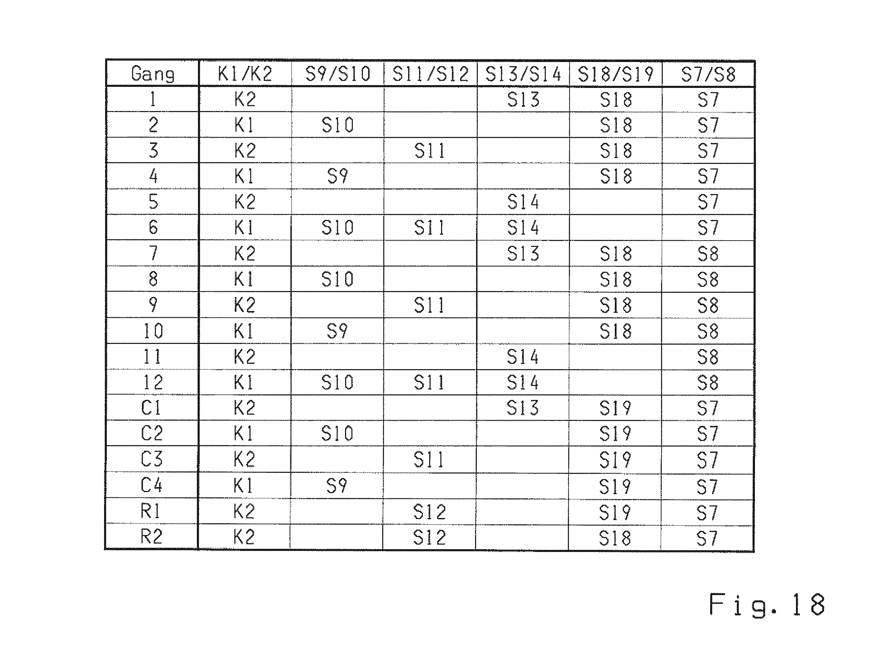

Aus Fig. 18 ist des Weiteren ein beispielhaftes Schaltschema des Stufengetriebes 23 aus Fig. 17 ersichtlich. Wie zu erkennen ist, können hierbei insgesamt zwölf Vorwärtsgänge, zwei Rückwärtsgänge sowie vier Kriechgänge geschaltet werden. Abgesehen von einem Gangwechsel zwischen dem sechsten und dem siebten Vorwärtsgang können die Vorwärtsgänge und auch die Kriechgänge hierbei jeweils unter Last geschaltet werden, so dass ein Gangwechsel ohne Unterbrechung der Zugkraft möglich ist.

Ein erster Vorwärtsgang wird nun dadurch geschaltet, dass das Lastschaltelement K2 geschlossen, sowie die Schaltelemente S13, S18 und S7 betätigt werden, während ein zweiter Vorwärtsgang durch Betätigen des Lastschaltelements K1 und Ansteuern der Schaltelemente S10, S18 und S7 darstellbar ist. Ferner ergibt sich ein dritter Vorwärtsgang, indem das Lastschaltelement K2 geschlossen und die Schaltelemente S11, S18 und S7 betätigt werden, wohingegen ein weiterer, vierter Vorwärtsgang durch Ansteuerung des Lastschaltelements K1, sowie der Schaltelemente S9, S18 und S7 schaltbar ist. Ein fünfter Vorwärtsgang kann durch Schließen des Lastschaltelements K2, sowie Betätigen des Schaltelements S14 und des Schaltelements S7 dargestellt werden, wobei ein sechster Vorwärtsgang über das Lastschaltelement K1 im Zusammenspiel mit den Schaltelementen S10, S11, S14 und S7 definiert wird. Des Weiteren ergibt sich ein siebter Vorwärtsgang dadurch, dass das Lastschaltelement K2 geschlossen und die Schaltelemente S13, S18 und S8 angesteuert werden, während bei Ansteuerung des Lastschaltelements K1 und der Schaltelemente S10, S18 und S8 ein achter Vorwärtsgang definiert wird. Ein weiterer, neunter Vorwärtsgang ist durch Schließen des Lastschaltelements K2, sowie Betätigen der Schaltelemente S11, S18 und S8 schaltbar, während ein hierauf folgender zehnter Vorwärtsgang mittels Betätigen des Lastschaltelements K1 und der Schaltelemente S9, S18 und S8 dargestellt wird. Schließlich können noch ein elfter Vorwärtsgang und ein zwölfter Vorwärtsgang geschaltet werden, wobei dies beim elften Vorwärtsgang durch Betätigen des Lastschaltelements K2 und der Schaltelemente S14 und S8 realisiert wird, wohingegen im Falle des zwölften Vorwärtsganges das Lastschaltelement K1 anzusteuern und die Schaltelemente S10, S11, S14 und S8 zu betätigen sind.

Hingegen ist ein erster Kriechgang schaltbar, indem das Lastschaltelement K2 geschlossen und die Schaltelemente S13, S19 und S7 betätigt werden. Ein weiterer, zweiter Kriechgang kann hingegen durch Ansteuerung des Lastschaltelements K1, sowie der Schaltelemente S10, S19 und S7 dargestellt werden, während ein dritter Kriechgang mittels Betätigung des Lastschaltelements K2, sowie der Schaltelemente S11, S19 und S7 schaltbar ist. Schließlich ergibt sich noch ein vierter Kriechgang, indem das Lastschaltelement K1 geschlossen und die Schaltelemente S9, S19 und S7 angesteuert werden. Die beiden Rückwärtsgänge werden jeweils durch Schließen des Lastschaltelements K2 geschaltet, wobei im Falle des ersten Rückwärtsganges zudem die Schaltelemente S12, S19 und S7 und hinsichtlich des zweiten Rückwärtsganges die Schaltelemente S12, S18 und S7 zu betätigen sind.

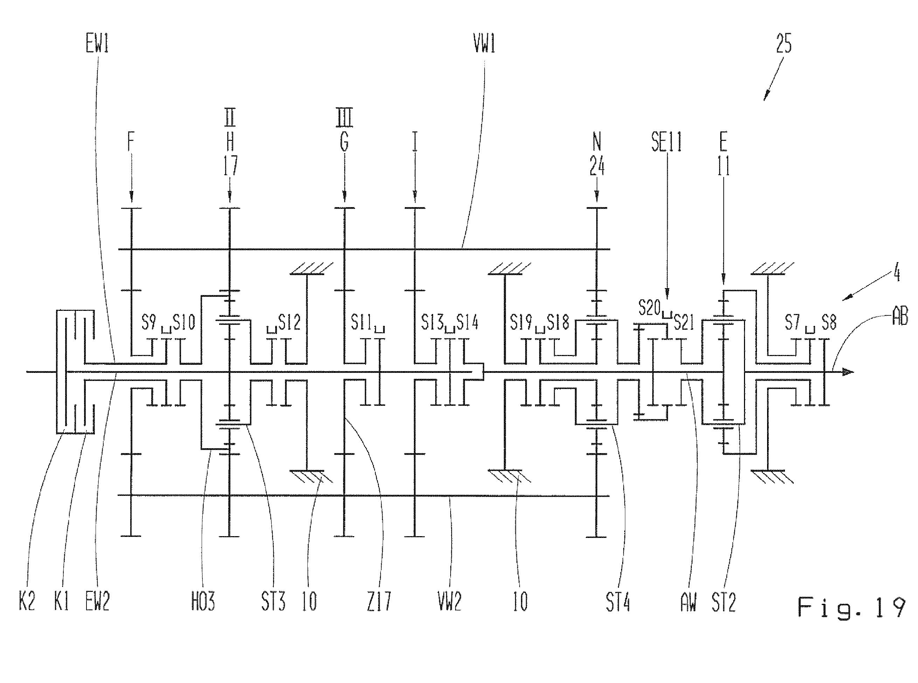

Schließlich geht noch aus Fig. 19 eine elfte Ausgestaltungsmöglichkeit eines Stufengetriebes 25 hervor. Diese entspricht weitestgehend dem Stufengetriebe 23 aus Fig. 17, wobei sich das Stufengetriebe 25 dabei von diesem Stufengetriebe 23 dahingehend unterscheidet, dass, wie schon bei den Stufengetrieben 19 und 21, die Übersetzungsstufe G in einer dritten Radebene III vorgesehen ist, während die verschachtelt ausgestaltete Übersetzungsstufe H in einer zweiten Radebene II des Stufengetriebes 25 platziert ist. Dementsprechend kann auch ein Hohlrad H03 des Planetensatzes 17 wiederum mittels des Schaltelements S10 drehfest mit der Eingangswelle EW1 verbunden werden, wohingegen der Planetensteg ST3 des Planetensatzes 17 mittels des Schaltelements S12 am Getriebegehäuse 10 festsetzbar ist. Hinsichtlich der Übersetzungsstufe G ist das Stirnrad Z17 über das Schaltelement S11 nun drehfest mit der Eingangswelle EW2 koppelbar.

Als weiterer Unterschied ist zudem der Planetensteg ST4 des Planetensatzes 24 nicht permanent mit der Ausgangswelle AW gekoppelt, sondern kann entweder über ein Schaltelement S20 drehfest mit der Ausgangswelle AW verbunden oder aber über ein Schaltelement S21 drehfest mit dem Planetensteg ST2 des Planetensatzes 11 gekoppelt werden. Dementsprechend ist also über die Übersetzungsstufe N entweder eine Übersetzung einer Drehbewegung der Vorgelegewellen VW1 und VW2 auf die Abtriebsseite AB im Zusammenspiel mit der nachgeschalteten Bereichsgruppe 4 möglich oder aber die nachgeschaltete Bereichsgruppe 4 wird umgangen. Das Schaltelement S20 und das Schaltelement S21 sind dabei in einer Schalteinrichtung SE11 zusammengefasst, deren Schaltmuffe bei Verschiebung aus einer Neutralstellung heraus entweder das Schaltelement S20 oder das Schaltelement S21 betätigt.

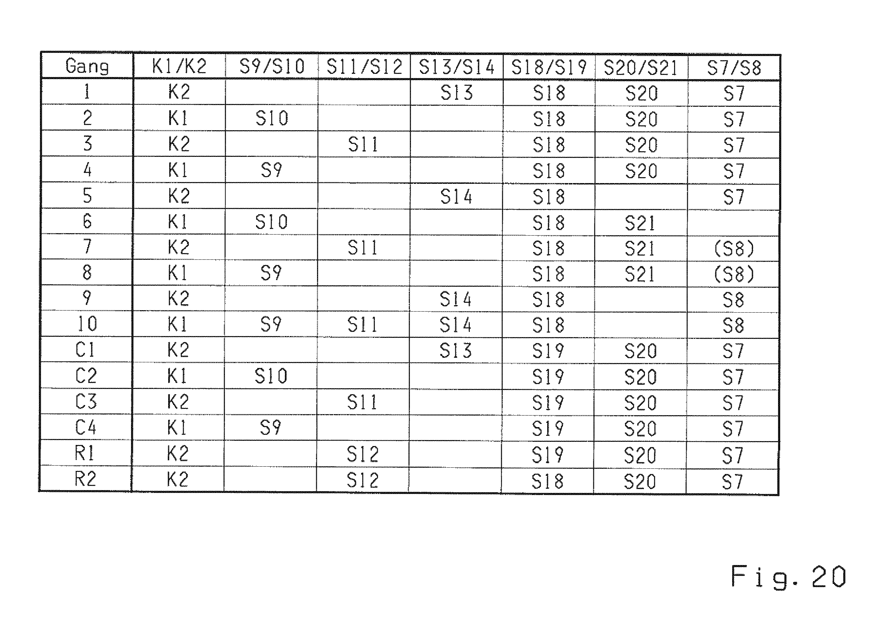

Ein, über das Stufengetriebe 25 aus Fig. 19 darstellbares, beispielhaftes Schaltschema geht nun aus Fig. 20 hervor. Hierbei können insgesamt zehn Vorwärtsgänge, zwei Rückwärtsgänge, sowie vier Kriechgänge geschaltet werden, wobei zwischen den Vorwärtsgängen und den Kriechgängen ein Gangwechsel ohne Unterbrechung der Zugkraft vollzogen werden kann.

Hierbei ergibt sich ein erster Vorwärtsgang, indem das Lastschaltelement K2 geschlossen und die Schaltelemente S13, S18, S20 und S7 betätigt werden, während ein weiterer, zweiter Vorwärtsgang durch Schließen des Lastschaltelements K1 und Ansteuerung der Schaltelemente S10, S18, S20 und S7 darstellbar ist. Ferner wird ein dritter Vorwärtsgang dadurch definiert, dass das Lastschaltelement K2 geschlossen und eine Betätigung der Schaltelemente S11, S18, S20 und S7 vorgenommen wird, wohingegen zur Darstellung eines vierten Vorwärtsganges sowohl das Lastschaltelement K1 als auch die Schaltelemente S9, S18, S20 und S7 in einen betätigten Zustand zu überführen sind. Bei Ansteuerung des Lastschaltelements K2 und der Schaltelemente S14, S18 und S7 wird ein fünfter Vorwärtsgang geschaltet, während ein sechster Vorwärtsgang durch Schließen des Lastschaltelements K1 und Ansteuerung der Schaltelemente S10, S18 und S21 darstellbar ist. Ferner ergibt sich ein siebter Vorwärtsgang dadurch, dass das Lastschaltelement K2 geschlossen und die Schaltelemente S11, S18 und S21 betätigt werden, wohingegen ein weiterer, achter Vorwärtsgang über das Lastschaltelement K1 im Zusammenspiel mit den Schaltelementen S9, S18 und S21 schaltbar ist. Dabei ist entweder bereits in dem siebten Vorwärtsgang, spätestens aber in dem achten Vorwärtsgang bereits das Schaltelement S8 anzusteuern, um auch einen Gangwechsel vom achten Vorwärtsgang in einen neunten Vorwärtsgang unter Last durchführen zu können. Dieser neunte Vorwärtsgang wird dann durch Schließen des Lastschaltelements K2, sowie der Schaltelemente S14, S18 und S8 dargestellt, wohingegen sich ein letzter, zehnter Vorwärtsgang durch Schließen des Lastschaltelements K1 und Ansteuerung der Schaltelemente S9, S11, S14, S18 und S8 ergibt.

Demgegenüber kann ein erster Kriechgang durch Schließen des Lastschaltelements K2 und Betätigen der Schaltelemente S13, S19, S20 und S7 dargestellt werden, während ein hierauf folgender, zweiter Kriechgang mittels Ansteuerung des Lastschaltelements K1 und der Schaltelemente S10, S19, S20 und S7 schaltbar ist. Bei Schließen des Lastschaltelements K2 und Betätigung der Schaltelemente S11, S19, S20 und S7 wird zudem ein dritter Kriechgang geschaltet, wohingegen sich ein vierter Kriechgang bei Betätigen des Lastschaltelements K1 und der Schaltelemente S9, S19, S20 und S7 ergibt. Schließlich werden beide Rückwärtsgänge jeweils durch Betätigen des Lastschaltelements K2 dargestellt, wobei hinsichtlich eines ersten Rückwärtsganges dann noch die Schaltelemente S12, S19, S20 und S7 anzusteuern sind, während im Falle eines zweiten Rückwärtsganges eine Betätigung der Schaltelemente S12, S18, S20 und S7 vorzunehmen ist.

Durch Verwendung mindestens einer verschachtelten Übersetzungsstufe A, H und N bei den erfindungsgemäßen Stufengetrieben 1, 12, 13, 14, 18, 19, 20, 21, 22, 23 und 25 können diese in axialer Richtung bei einer entsprechend großen Anzahl an darstellbaren Gängen kompakt ausgestaltet werden.

### Bezugszeichen

- 1: Stufengetriebe
- 2: Hauptgruppe
- 3: Splitgruppe
- 4: Bereichsgruppe
- 5: Brennkraftmaschine
- 6: Hauptwellenachse
- 7: Vorgelegeachse
- 8: Vorgelegeachse
- 9: Planetensatz
- 10: Getriebegehäuse
- 11: Planetensatz
- 12: Stufengetriebe
- 13: Stufengetriebe
- 14: Stufengetriebe
- 15: Hauptgruppe
- 16: Doppelkupplung
- 17: Planetensatz
- 18: Stufengetriebe
- 19: Stufengetriebe
- 20: Stufengetriebe
- 21: Stufengetriebe
- 22: Stufengetriebe
- 23: Stufengetriebe
- 24: Planetensatz
- 25: Stufengetriebe

- I: erste Radebene
- II: zweite Radebene
- III: dritte Radebene
- IV: vierte Radebene
- V: fünfte Radebene
- VI: sechste Radebene
- VII: siebte Radebene
- AN: Antriebsseite
- AB: Abtriebsseite

- EW: Eingangswelle
- EW1: Eingangswelle
- EW2: Eingangswelle
- AW: Ausgangswelle
- VW1: Vorgelegewelle
- VW2: Vorgelegewelle

- Z1 bis Z33: Stirnräder

- S1 bis S21: Schaltelemente
- SE1 bis SE11: Schalteinrichtungen

- K: Lastschaltelement
- K1: Lastschaltelement
- K2: Lastschaltelement

- A: Übersetzungsstufe
- B: Übersetzungsstufe
- C: Übersetzungsstufe
- D: Übersetzungsstufe
- E: Übersetzungsstufe
- F: Übersetzungsstufe
- G: Übersetzungsstufe
- H: Übersetzungsstufe
- I: Übersetzungsstufe
- J: Übersetzungsstufe
- L: Übersetzungsstufe
- M: Übersetzungsstufe
- N: Übersetzungsstufe

- SO1: Sonnenrad
- HO1: Hohlrad
- PL1: Planetenräder
- ST1: Planetensteg

- S02: Sonnenrad
- H02: Hohlrad
- PL2: Planetenräder
- ST2: Planetensteg

- S03: Sonnenrad
- H03: Hohlrad
- PL3: Planetenräder
- ST3: Planetensteg

- S04: Sonnenrad
- H04: Hohlrad
- PL4: Planetenräder
- ST4: Planetensteg

## Patentansprüche

1. Übersetzungsstufe (A; H; N) eines Stufengetriebes (1; 12; 13; 14; 18; 19; 20; 21; 22; 23; 25), über welche mindestens zwei auf zueinander parallelen Achsen verlaufende Getriebewellen miteinander koppelbar sind, **dadurch gekennzeichnet, dass** koaxial zu einer ersten Achse ein Planetensatz (9; 17; 24) vorgesehen ist, von dessen drei Getriebekomponenten eine erste Getriebekomponente seitens der ersten Achse trieblich angebunden oder trieblich anbindbar ist und eine zweite Getriebekomponente mit mindestens einem Stirnrad (Z1, Z2; Z18, Z19; Z32, Z33) im Zahneingriff steht, welches auf je einer weiteren, zur ersten Achse parallelen Achse platziert ist, und dass zum einen ein erstes Übersetzungsverhältnis durch Festsetzen einer dritten Getriebekomponente des Planetensatzes (9; 17; 24) schaltbar und zum anderen ein zweites Übersetzungsverhältnis durch triebliches Anbinden von entweder der dritten Getriebekomponente oder der zweiten Getriebekomponente seitens der ersten Achse darstellbar ist.

2. Übersetzungsstufe (A; H; N) nach Anspruch 1, **dadurch gekennzeichnet, dass** die zweite Getriebekomponente als Hohlrad (H01; H03; H04) ausgestaltet ist, welches einerseits an einer Innenverzahnung mit den übrigen Getriebekomponenten des Planetensatzes (9; 17; 24) in Verbindung steht und andererseits an einer Außenverzahnung mit dem mindestens einen Stirnrad (Z1, Z2; Z18, Z19; Z32, Z33) kämmt.

3. Übersetzungsstufe (A; H) nach Anspruch 2, **dadurch gekennzeichnet, dass** die erste Getriebekomponente durch ein Sonnenrad (S01; S03) gebildet ist, welches mittels zwischenliegender Planetenräder (PL1; PL3) eines die dritte Getriebekomponente bildenden Planetenstegs (ST1; ST3) mit dem Hohlrad (H01; H03) in Verbindung steht.

4. Übersetzungsstufe (N) nach Anspruch 2, **dadurch gekennzeichnet, dass** die erste Getriebekomponente durch einen Planetensteg (ST4) des Planetensatzes (24) gebildet ist, welcher Planetenräder (PL4) führt, die jeweils sowohl mit einem die dritte Getriebekomponente bildenden Sonnenrad (S04) als auch mit dem Hohlrad (H04) kämmen.

5. Übersetzungsstufe (A; H; N) nach Anspruch 1, **dadurch gekennzeichnet, dass** die zweite Getriebekomponente des Planetensatzes (9; 17; 24) mit zwei Stirnrädern (Z1, Z2; Z18, Z19; Z32, Z33) im Zahneingriff steht, welche jeweils seitens je einer, parallel zur ersten Achse verlaufenden Achse vorgesehen sind.

6. Stufengetriebe (1; 12; 13; 14; 18; 19; 20; 21; 22; 23; 25), insbesondere Kraftfahrzeuggetriebe, umfassend mindestens zwei auf zueinander parallelen Achsen verlaufende Getriebewellen, welche über mindestens eine Übersetzungsstufe (A bis E; E, F bis J; E, F bis I, L; E, F bis J, M; E, F bis I, N) miteinander koppelbar sind, wobei zumindest eine Übersetzungsstufe (A; H; N; H, N) gemäß einem der vorhergehenden Ansprüche als verschachtelte Übersetzungsstufe ausgestaltet ist.

7. Stufengetriebe (1; 12; 13) nach Anspruch 6, **dadurch gekennzeichnet, dass** eine erste Achse eine Hauptwellenachse (6) ist, auf welcher eine Eingangswelle (EW) verläuft, wobei parallel zu der Hauptwellenachse (6) mindestens eine Vorgelegeachse (7, 8) mit je einer Vorgelegewelle (VW1, VW2) vorgesehen ist, die mit der Eingangswelle (EW) mittels einer ersten, gemäß Anspruch 3 verschachtelt ausgestalteten Übersetzungsstufe (A) in Verbindung bringbar ist, wobei das Sonnenrad (SO1) der ersten Übersetzungsstufe (A) drehfest auf der Eingangswelle (EW) angeordnet und das mindestens eine Stirnrad (Z1, Z2) der ersten Übersetzungsstufe (A) drehfest auf der je einen Vorgelegewelle (VW1, VW2) platziert ist, wohingegen zum einen der Planetensteg (ST1) an einem Getriebegehäuse (10) festsetzbar und zum anderen entweder der Planetensteg (ST1) oder das Hohlrad (HO1) drehfest mit der Eingangswelle (EW) verbindbar ist, und wobei koaxial zu der Eingangswelle (EW) ein drehbar gelagertes Stirnrad (Z3) einer zweiten Übersetzungsstufe (B) vorgesehen ist, welches mit je einem drehfest auf der je einen Vorgelegewelle (VW1, VW2) platzierten Stirnrad (Z4, Z5) kämmt und sowohl an der Eingangswelle (EW) als auch an einer koaxial zur Eingangswelle (EW) verlaufenden Ausgangswelle (AW) festsetzbar ist, so dass die Eingangswelle (EW) und die Ausgangswelle (AW) einerseits jeweils mit der je einen Vorgelegewelle (VW1, VW2) und andererseits untereinander koppelbar sind, und wobei die Ausgangswelle (AW) noch über eine dritte Übersetzungsstufe (C) und entweder die Eingangswelle (EW) oder die Ausgangswelle (AW) mittels einer vierten Übersetzungsstufe (D) mit der je einen Vorgelegewelle (VW1, VW2) koppelbar ist.

8. Stufengetriebe (14; 18; 19; 20; 21; 22; 23; 25) nach Anspruch 6, **dadurch gekennzeichnet, dass** zwei Teilgetriebe vorgesehen sind, deren koaxial zueinander angeordnete Eingangswellen (EW1, EW2) auf einer ersten, als Hauptwellenachse (6) ausgeführten Achse verlaufen und die jeweils abwechselnd durch Verbinden der je zugeordneten Eingangswelle (EW1, EW2) mit einer Antriebsseite (AN) in einen Kraftfluss einbindbar sind, wobei die erste Eingangswelle (EW1) als Getriebehohlwelle und die zweite Eingangswelle (EW2) als Getriebezentralwelle ausgestaltet und parallel zu der Hauptwellenachse (6) mindestens eine Vorgelegeachse (7, 8) mit je einer Vorgelegewelle (VW1, VW2) vorgesehen ist, mit welcher die erste Eingangswelle (EW1) über eine erste Übersetzungsstufe (F) und mit der die zweite Eingangswelle (EW2) mittels einer zweiten Übersetzungsstufe (I) koppelbar ist, und wobei koaxial zu den Eingangswellen (EW1, EW2) eine Ausgangswelle (AW) vorgesehen ist, die mit der zweiten Eingangswelle (EW2) drehfest verbindbar ist.

9. Stufengetriebe (14; 18; 20; 23) nach Anspruch 8, **dadurch gekennzeichnet, dass** zum einen die erste Eingangswelle (EW1) über eine dritte Übersetzungsstufe (G) und zum anderen die zweite Eingangswelle (EW2) mittels einer vierten Übersetzungsstufe (H) jeweils mit der je einen Vorgelegewelle (VW1, VW2) koppelbar sind, wobei die vierte Übersetzungsstufe (H) als gemäß Anspruch 3 verschachtelte Übersetzungsstufe ausgestaltet ist, deren mindestens eines Stirnrad (Z18, Z19) drehfest auf der je einen Vorgelegewelle (VW1, VW2) und deren Sonnenrad (S03) drehfest auf der zweiten Eingangswelle (EW2) angeordnet ist, wobei der Planetensteg (ST3) der vierten Übersetzungsstufe (H) zum einen drehfest mit der zweiten Eingangswelle (EW2) verbindbar und zum anderen an einem Getriebegehäuse (10) festsetzbar ist.

10. Stufengetriebe (19; 21 ; 22; 25) nach Anspruch 8, **dadurch gekennzeichnet, dass** zum einen die zweite Eingangswelle (EW2) über eine dritte Übersetzungsstufe (G) mit der je einen Vorgelegewelle (VW1, VW2) in Verbindung bringbar ist und zum anderen die erste Eingangswelle (EW1) oder die zweite Eingangswelle (EW2) mittels einer vierte Übersetzungsstufe (H) jeweils mit der je einen Vorgelegewelle (VW1, VW2) koppelbar sind, wobei die vierte Übersetzungsstufe (H) als gemäß Anspruch 3 verschachtelte Übersetzungsstufe ausgestaltet ist, deren mindestens eines Stirnrad (Z18, Z19) drehfest auf der je einen Vorgelegewelle (VW1, VW2) und deren Sonnenrad (S03) drehfest auf der zweiten Eingangswelle (EW2) angeordnet ist, wobei zum einen das Hohlrad (H03) der vierten Übersetzungsstufe (H) drehfest mit der ersten Eingangswelle (EW1) verbindbar und zum anderen der Planetensteg (ST3) der vierten Übersetzungsstufe (H) an einem Getriebegehäuse (10) festsetzbar ist.

11. Stufengetriebe (14) nach Anspruch 9 oder 10, **dadurch gekennzeichnet, dass** die Ausgangswelle (AW) über eine fünfte Übersetzungsstufe (J) mit der je einen Vorgelegewelle (VW1, VW2) gekoppelt ist.

12. Stufengetriebe (18; 19; 20; 21; 22; 23; 25) nach Anspruch 9 oder 10, **dadurch gekennzeichnet, dass** die Ausgangswelle (AW) mit der je einen Vorgelegewelle (VW1, VW2) mittels einer fünften Übersetzungsstufe (L; N) koppelbar ist.

13. Stufengetriebe (23; 25) nach Anspruch 12, **dadurch gekennzeichnet, dass** die fünfte Übersetzungsstufe (N) als gemäß Anspruch 4 verschachtelte Übersetzungsstufe ausgestaltet ist, deren mindestens eines Stirnrad (Z32, Z33) drehfest auf der je einen Vorgelegewelle (VW1, VW2) vorgesehen ist, wobei das Sonnenrad (S04) der fünften Übersetzungsstufe (N) einerseits am Getriebegehäuse (10) festsetzbar und andererseits mit dem Planetensteg (ST4) der fünften Übersetzungsstufe (N) koppelbar ist, welcher entweder drehfest mit der Ausgangswelle (AW) verbunden oder einerseits mit der Ausgangswelle (AW) und andererseits mit einer Abtriebsseite (AB) koppelbar ist.

14. Stufengetriebe (1; 12; 13; 14; 18; 19; 20; 21; 22; 23; 25) nach Anspruch 7 oder 8, **dadurch gekennzeichnet, dass** die Ausgangswelle (AW) über einen nachgeschalteten Planetensatz (11) mit einer Abtriebsseite (AB) in Verbindung bringbar ist, wobei die Ausgangswelle (AW) ein Sonnenrad (S02) des nachgeschalteten Planetensatzes (11) trägt und ein Planetensteg (ST2) des nachgeschalteten Planetensatzes (11) mit der Abtriebsseite (AB) verbunden ist, und wobei das Sonnenrad (S02) des nachgeschalteten Planetensatzes (11) über zwischenliegende, am Planetensteg (ST2) des nachgeschalteten Planetensatzes (11) geführte Planetenräder (PL2) mit einem Hohlrad (H02) des nachgeschalteten Planetensatzes (11) in Verbindung steht, welches zur Darstellung unterschiedlicher Übersetzungsverhältnisse einerseits am Getriebegehäuse (10) festsetzbar und andererseits mit der Abtriebsseite (AB) koppelbar ist.

15. Stufengetriebe (25) nach Anspruch 13 und 14, **dadurch gekennzeichnet, dass** der Planetensteg (ST4) der fünften Übersetzungsstufe (N) einerseits mit der Ausgangswelle (AW) und andererseits mit dem Planetensteg (ST2) des nachgeschalteten Planetensatzes (11) drehfest verbindbar ist.

16. Stufengetriebe (20, 21, 22) nach Anspruch 12 und 14, **dadurch gekennzeichnet, dass** ein auf der Ausgangswelle (AW) drehbar gelagertes Stirnrad (Z26) der fünften Übersetzungsstufe (L) einerseits mit der Ausgangswelle (AW) und andererseits mit dem Planetensteg (ST2) des nachgeschalteten Planetensatzes (11) drehfest verbindbar ist.

17. Stufengetriebe (22) nach Anspruch 11 oder 12, **dadurch gekennzeichnet, dass** die erste Eingangswelle (EW1) über eine sechste Übersetzungsstufe (M) mit der je einen Vorgelegewelle (VW1, VW2) koppelbar ist.
